# EUROPEAN PATENT SPECIFICATION

(11) **EP 3 801 815 B1**
(45) Date of publication and mention of the grant of the patent: **06.08.2025**
(21) Application number: 19726160.5
(22) Date of filing: 30.04.2019
(51) Int. Cl.: B01D 35/06, B01D 35/16, B01D 35/30, B01D 29/03

(54) **DEVICE AND METHOD FOR FILTERING A FLUID CIRCULATING IN A PLUMBING AND HEATING SYSTEM**
VORRICHTUNG UND VERFAHREN ZUM FILTERN EINER IN EINEM SANITÄR- UND HEIZSYSTEM ZIRKULIERENDEN FLÜSSIGKEIT
DISPOSITIF ET PROCÉDÉ DE FILTRAGE D'UN FLUIDE CIRCULANT DANS UN SYSTÈME DE PLOMBERIE ET DE CHAUFFAGE

(30) Priority: 06.06.2018 IT 201800006093
(43) Date of publication of application: 14.04.2021
(73) Proprietor: I.V.A.R. S.P.A., 25080 Prevalle (BS) (IT)
(72) Inventor: BERTOLOTTI, Mr. Umberto, 25080 Prevalle (BS) (IT); CONTINI, Mario, 25020 FLERO (BS) (IT)
(74) Representative: PGA S.p.A.
(86) International application number: PCT/IB2019/053542
(87) International publication number: WO 2019/234518

(56) References cited:
- EP-A1- 3 159 313
- WO-A1-00/69547
- CN-Y- 2 696 704
- GB-A- 970 826
- KR-A- 20130 129 509

## Description

The present invention relates to a device, and an associated method, for filtering a fluid circulating in a plumbing and heating system
The invention has advantageous application in the context of plumbing systems for temperature regulation and/or the supply of domestic hot water in residential, commercial or industrial buildings.

Heating or domestic hot water supply systems provide for the circulation of a fluid, typically water, which circulates through the various system components (pipes, boiler, pump, valves, radiant elements, utilities, etc.).

In such systems the use of filters suitable for maintaining the circulating fluid as clean as possible, i.e. free of impurities, such as dirt, sand, polluting particles, etc., is well known. This is because such impurities, while circulating within the system, can provoke clogging, faults in some components, in particular the boiler and the valves, and in general cause a deterioration in the performance of the various components and a loss of overall efficiency.

Among the various impurities, it is particularly important to remove the ferrous particles - typically released by system components such as pipes and radiant elements (for example heaters and radiators) - since they can cause breaks inside the boiler members or perforations in the pipes of the system.

The filters are usually installed interposed between the line carrying the fluid returning from the system, typically containing impurities and ferrous particles, and the line that sends the incoming fluid to the boiler (or heat pump). In this manner, the filter can act on the delivery to the boiler, that is, upstream of the latter, by sending fluid that has been filtered and cleaned of impurities.

Because of this typical installation, the known filters are usually identified as "under-boiler" filters; moreover, in the jargon of this technical sector, such filters are called "dirt separators", because of their function of removing impurities.

Providing that the filter may be opened in order to carry out periodic maintenance operations, and in particular to remove the impurities collected by the filter or replace the filtering elements, is likewise known.

One known type of filter provides both for the use of mesh filtering elements, which retain impurities such as sand and dirt, and the use of filtering elements of a magnetic type, which enable the ferrous particles to be separated from the fluid in transit by attracting them and holding them in contact with the magnetic element.

An example of a mechanical magnetic filter is described in European patent application EP3159313A1. This solution envisages a filter body provided with three distinct inlet/outlet mouths, identical to one another, two of which lateral, in opposite positions of the body, and an upper one; essentially, the three mouths are arranged like a "T". At the time of installation, it is possible to select which of the three mouths will be connected to the return line of the system and which must instead be connected to the line delivering to the boiler. This allows the filter to be installed vertically or horizontally, based on the space available beneath the boiler (which in some cases is very limited) and the position of the wall the boiler is fixed to, by appropriately connecting the mouths.

The Applicant has found that the prior art solutions described above are not without drawbacks and could be improved in several respects.

First of all, some known solutions featuring three mouths arranged like a "T" are capable of effectively filtering only when the central mouth, i.e. the one situated on top of the filter body, is used for the entry of fluid into the filter or for the exit of fluid from the filter. This is because such known solutions envisage a cylindrical mesh filter element (mechanical filtration) arranged longitudinally inside the filtration chamber, for the whole length of the chamber itself, and a magnetic filtering element arranged, in turn, inside the cylindrical mesh element. In this configuration, the central mouth (situated on top of the body of the cylinder) is inside the cylindrical mesh element, whereas the two lateral mouths (on opposite sides of the body of the cylinder) are instead outside the cylindrical mesh element.

This means, in particular in configurations in which the two lateral mouths are used for the entry of the fluid to be filtered and the exit of the filtered fluid (and the upper mouth is capped), that the flow can easily travel through the filtration chamber, passing around the cylindrical mesh element, without being obliged to pass through it, and as a result most of the fluid passes through the filter without being subjected to mechanical filtering (i.e. without passing through the mesh), with a consequent reduced filtering of impurities and dirt, and without transiting in proximity to the magnetic element, with a consequent reduced filtering of the ferrous particles.

In short, although some of the known solutions are proposed for a use according to various configurations, intended to meet different installation needs, they operate efficiently in one configuration only, whereas in other configurations there is no passage of the entire flow through the filtering elements, only a simple transit from the inlet mouth to the outlet mouth.

In addition, the known solutions pose a risk of clogging of the cylindrical mesh element that performs the mechanical filtering, because of the non-optimal management of the flows circulating inside the filtration chamber. Clogging introduces a decrease in the rate of flow through the filter, or even complete obstruction.

Furthermore, the known filters are not able to provide effective solutions, in terms of assembly, access and maintenance, for all the different installation conditions and the different types of boilers, heat exchangers or heat pumps.

In this situation the object at the basis of the present invention, in the various aspects and/or embodiments thereof, is to provide a device and a method for filtering a fluid that may be capable of remedying one or more of the above-mentioned drawbacks.

A further object of the present invention is to provide a device and a method capable of achieving an effective filtration of a fluid circulating in a plumbing and heating system.

A further object of the present invention is to provide a device for filtering a fluid that is characterised by great versatility and is capable of being adapted to a high number and different types of boilers or other components of a heating system.

A further object of the present invention is to provide a device for filtering a fluid capable of operating with consistent high performances irrespective of the mode of installation inside a plumbing and heating system.

A further object of the present invention is to provide a device for filtering a fluid characterised by a high operating reliability and/or a lower predisposition to faults and malfunctions and/or which is capable of being maintained in a simple and rapid manner.

A further object of the present invention is to provide a device for filtering a fluid characterised by a simple and rational structure.

A further object of the present invention is to provide a device for filtering a fluid characterised by a low production cost in relation to the performances and quality offered.

A further object of the present invention is to create alternative solutions to the prior art in the construction of devices and methods for filtering a fluid circulating in a plumbing and heating system, and/or to open new fields of design.

These objects, and any others that will become more apparent in the course of the following description, are substantially achieved by a device for filtering a fluid and a method for filtering a fluid according to one or more of the appended claims 1-14.

In a first aspect thereof, the invention relates to a device for filtering a fluid, comprising a body of the device which defines therewithin a filtration chamber that is destined to have a fluid to be subjected to filtration pass through it, said body being provided with:
- a first inlet/outlet opening, which sets said filtration chamber in communication with the outside of the device and is configured to be associated with a line so as to receive therefrom, or to send thereto, fluid entering, or exiting from, said body of the device;
- a second inlet/outlet opening, which sets said filtration chamber in communication with the outside of the device and is configured to be associated with a respective line so as to receive therefrom, or to send thereto, fluid entering, or exiting from, said body of the device;
- a third inlet/outlet opening, which sets said filtration chamber in communication with the outside of the device and is configured to be associated with a respective line so as to receive therefrom, or to send thereto, fluid entering, or exiting from, said body of the device.

In one aspect, the device is configured to bring about a passage of fluid through said filtration chamber, in a selective manner according to a plurality of operative configurations, from one opening among said first inlet/outlet opening, second inlet/outlet opening and third inlet/outlet opening to another opening among said first inlet/outlet opening, second inlet/outlet opening and third inlet/outlet opening.

In one aspect, the device comprises filtering members that are at least partially housed inside said filtration chamber, or associated with said body of the device, and operatively interposed between said first inlet/outlet opening, second inlet/outlet opening and third inlet/outlet opening to carry out filtering of the fluid passing through the filtration chamber.

In one aspect, the filtering members comprise at least one filtering septum configured to perform a mechanical separation of substances and solid particles present in the fluid to be treated from the fluid in which they are suspended, said filtering septum being arranged inside said filtration chamber so as to subdivide, preferably longitudinally, the filtration chamber into a first half-chamber and a second half-chamber.

In one aspect, the first half-chamber is in fluid communication (only) with the first inlet/outlet opening (and not with the second and/or the third opening), without passage through the filtering septum.

In one aspect, the second half-chamber is in fluid communication (only) with the second inlet/outlet opening and with the third inlet/outlet opening (and not with the first opening), without passage through the filtering septum.

In one aspect, the device is configured in such a manner that in each one of said plurality of operative configurations, in order to pass from said first half-chamber to said second half-chamber, or vice versa, the fluid transiting in the filtration chamber, (necessarily) passes through said filtering septum.

In one aspect, the device is configured to be associated with or installed along a delivery line, or in series with a delivery line, carrying a fluid to equipment of a plumbing and heating system, to perform a filtration of the fluid circulating in the system in a position upstream of such equipment.

In one aspect, the passage between the first half-chamber and the second half-chamber necessarily takes place through the filtering septum.

In one aspect, the first half-chamber and the second half-chamber communicate with each other only through the filtering septum.

In one aspect, the filtering septum has, at least partially, a structure provided with a plurality of passages having a given filtering section, so that the passage of the fluid from a first side of the filtering septum to a second side of the filtering septum determines retention, on the first side, of the substances and particles present in the fluid and having dimensions greater than said filtering section.

Conversely, if the passage of the fluid takes place from the second side of the filtering septum to the first side of the filtering septum, the retention of the substances and particles present in the fluid and having dimensions greater than said filtering section takes place on the second side.

In one aspect, the filtering septum has the form of a thin sheet or membrane that extends longitudinally on a plane of extension between an upper end and a lower end.

In one aspect, the filtering septum is positioned in the filtration chamber in such a manner that the first side thereof faces the first inlet/outlet opening and the second side thereof faces the third inlet/outlet opening and/or the second inlet/outlet opening.

In one aspect, said filtering septum is configured to operate in a single position for use which is maintained for each one of said plurality of operative configurations taken on by the device, in which:
- it prevents the fluid from passing directly from the first opening to the second opening or from the first opening to the third opening, without passing through the filtering septum;
- it prevents the fluid from passing directly from the second opening to the first opening or from the third opening to the first opening without passing through the filtering septum.

In one aspect, the filtering septum does not need to be moved when the operative configuration taken on by the device changes.

In one aspect, said filtering septum is configured to operate in a single position for use, which is maintained for each one of said plurality of operative configurations taken on by the device, in which:
- passage of the fluid from the first opening to the second opening or from the first opening to the third opening takes place by passage through the filtering septum;
- a passage of the fluid from the second opening to the first opening or from the third opening to the first opening takes place by passage through the filtering septum.

In one aspect, the aforesaid plurality of operative configurations comprises at least:
- a first operative configuration, in which said first opening receives a flow of fluid entering the device, said second opening sends the flow of filtered fluid exiting from the device and said third opening is intercepted by a closure element;
- a second operative configuration, in which said first opening receives a flow of fluid entering the device, said third opening sends the flow of filtered fluid exiting from the device and said second opening is intercepted by a closure element;
- a third operative configuration, in which said third opening receives a flow of fluid entering the device, said first opening sends the flow of filtered fluid exiting from the device and said second opening is intercepted by a closure element;
- a fourth operative configuration, in which said second opening receives a flow of fluid entering the device, said first opening sends the flow of filtered fluid exiting from the device and said third opening is intercepted by a closure element.

In one aspect, the device comprises said closure element, configured to selectively intercept one opening among said first inlet/outlet opening, second inlet/outlet opening and third inlet/outlet opening.

In one aspect, the aforesaid operative configurations provide for passage of the fluid through the filtering septum (from the first side to the second side) when the fluid enters the device from the first inlet/outlet opening and leaves the device from the second inlet/outlet opening or from the third inlet/outlet opening.

In one aspect, the aforesaid operative configurations provide for passage of the fluid through the filtering septum (from the second side to the first side) when the fluid enters the device from the second inlet/outlet opening or from the third inlet/outlet opening and leaves the device from the first inlet/outlet opening.

In one aspect, when the fluid enters the device from the second inlet/outlet opening and leaves from the third inlet/outlet opening, or vice versa, and the first inlet/outlet opening is intercepted by a closure element, there is not necessarily any passage of fluid through the filtering septum and the filtration, of a magnetic type, takes place by means of said at least one first magnetic filter.

In one aspect, the filtration chamber is delimited laterally by a lateral surface, above by a top surface and below by a bottom surface of the body of the device.

In one aspect, the filtering members comprise at least one magnetic filter associated with the body of the device and configured to collect and retain substances and ferrous particles (or particles having ferromagnetic properties) that are present in the fluid to be treated, in such a manner as to separate them from the fluid passing through the device.

In an independent aspect thereof, the present invention relates to a heating system comprising a device according to claim 1.

In an independent aspect thereof, the present invention relates to a method for filtering a fluid circulating in a plumbing and heating system according to claim 14.

Additional features and advantages will become more apparent from the detailed description of some example, but not exclusive, embodiments, including a preferred embodiment, of a device and a method for filtering a fluid circulating in a plumbing and heating system in accordance with the present invention. This description is provided herein below with reference to the attached drawings, which are provided solely for purpose of providing approximate and thus non-limiting examples, and of which:

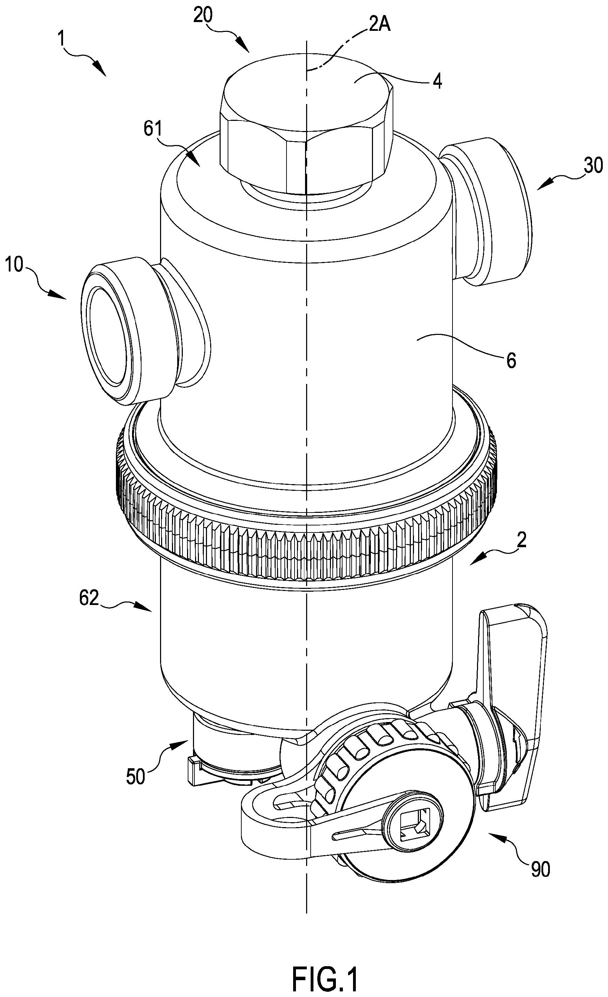

- figure 1 illustrates a possible embodiment of a device for filtering a fluid according to the present invention;
- figure 2 shows a front view of the device of figure 1;
- figure 3 shows a top view of the device of figure 1;
- figure 4 shows an exploded perspective view of the device of figure 1;
- figure 5 shows a sectional view, along the plane V-V, and exploded view of the device of figure 1, along a longitudinal direction, with some parts removed;
- figure 6 shows the device of figure 1, sectioned along the plane V-V in a first operative configuration;
- figure 7 shows the device of figure 1, sectioned along the plane V-V in a second operative configuration;
- figure 8 shows the device of figure 1, sectioned along the plane V-V in a third operative configuration;
- figure 9 shows the device of figure 1, sectioned along the plane V-V in a fourth operative configuration;
- figure 10 shows an exploded perspective view of a further possible embodiment of a device per the filtration of a fluid according to the present invention;
- figure 11 shows a sectional view, along the longitudinal plane, and exploded view of the device of figure 10, along a longitudinal direction, with some parts removed;
- figure 12 shows the device of figure 10, sectioned along a central longitudinal plane;
- figure 13 shows the device of figure 10, sectioned along a central longitudinal plane, perpendicular to the section plane of figure 12;
- figure 14 shows the device of figure 13 with the filtering septum removed.

With reference to the above-mentioned figures, the reference number 1 denotes in its entirety a device for filtering a fluid in accordance with the present invention. In general, the same reference number is used for identical or similar elements, possibly in the variant embodiments thereof.

The device 1 is destined to carry out the filtration of the fluid, typically water, circulating inside a plumbing and heating system, usually comprising pipes and conduits, valves, a boiler or a power generator, pumps, radiant elements (heaters, radiators, floor heating coils, etc.), utilities, etc.

In the figures the system for which the device is destined is not illustrated or described in a detailed manner, since it is in itself known in the technical field of the present invention.

The device 1 comprises first of all a body 2, which defines therewithin a filtration chamber 3 destined to have a fluid to be subjected to filtration pass through it. The body 2 is provided with a first inlet/outlet opening 10, a second inlet/outlet opening 20 and a third inlet/outlet opening 30: each one of them sets said filtration chamber 3 in communication with the outside of the device and is configured to be associated with a line of the system so as to receive therefrom, or to send thereto, fluid entering, or exiting from, said body of the device.

The device 1 is configured to bring about a passage of fluid through the filtration chamber 3, from one opening among said first inlet/outlet opening 10, second inlet/outlet opening 20 and third inlet/outlet opening 30 to another opening among said first inlet/outlet opening 10, second inlet/outlet opening 20 and third inlet/outlet opening 30. The two openings (among the aforesaid three openings 10, 20 and 30) between which the passage of fluid takes place can be selected as desired, according to a plurality of operative configurations, as will emerge more clearly below.

The device 1 comprises filtering members 40 that are at least partially housed inside the filtration chamber 3, or associated with the body 2 of the device, and operatively interposed between the three inlet/outlet openings 10, 20 and 30, to carry out filtering of the fluid passing through the filtration chamber 3.

The filtering members comprise at least one filtering septum 41 configured to perform a mechanical separation of substances and solid particles present in the fluid to be treated from the fluid in which they are suspended.

The filtering septum 41 is arranged inside the filtration chamber 3 so as to subdivide it, preferably longitudinally, into a first half-chamber 8 and a second half-chamber 9, wherein:
- the first half-chamber 8 is in fluid communication only with the first inlet/outlet opening 10, and not with the second 20 and the third inlet/outlet opening 30, without passage through the filtering septum 41;
- the second half-chamber 9 is in fluid communication only with the second inlet/outlet opening 20 and with the third inlet/outlet opening 20, and not with the first inlet/outlet opening 10, without passage through the filtering septum 41.

In this manner, the fluid transiting in the filtration chamber 3, in each one of said plurality of operative configurations, necessarily passes through the filtering septum 41 in order to pass from the first half-chamber 8 to the second half-chamber 9, or vice versa.

The device preferably comprises a closure element 4 configured to selectively intercept one opening among the aforesaid first inlet/outlet opening 10, second inlet/outlet opening 20 and third inlet/outlet opening 30.

According to a preferred embodiment, the plurality of operative configurations comprises:
- a first operative configuration, in which the first opening 10 receives a flow of fluid entering the device, the second opening 20 sends the flow of filtered fluid exiting from the device and the third opening is intercepted by the closure element 4;
- a second operative configuration, in which the first opening 10 receives a flow of fluid entering the device, the third opening 30 sends the flow of filtered fluid exiting from the device and the second opening 20 is intercepted by the closure element 4;
- a third operative configuration, in which the third opening 30 receives a flow of fluid entering the device, the first opening 10 sends the flow of filtered fluid exiting from the device and the second opening 20 is intercepted by the closure element 4;
- a fourth operative configuration, in which the second opening 20 receives a flow of fluid entering the device, the first opening 10 sends the flow of filtered fluid exiting from the device and the third opening 30 is intercepted by the closure element 4.

The closure element 4 is preferably a cap, removably associable with the openings.

It is evident that in each one of the operative configurations, one of the three openings acts as an inlet, another of the three openings acts as an outlet and the remaining opening is closed off and preferably not used.

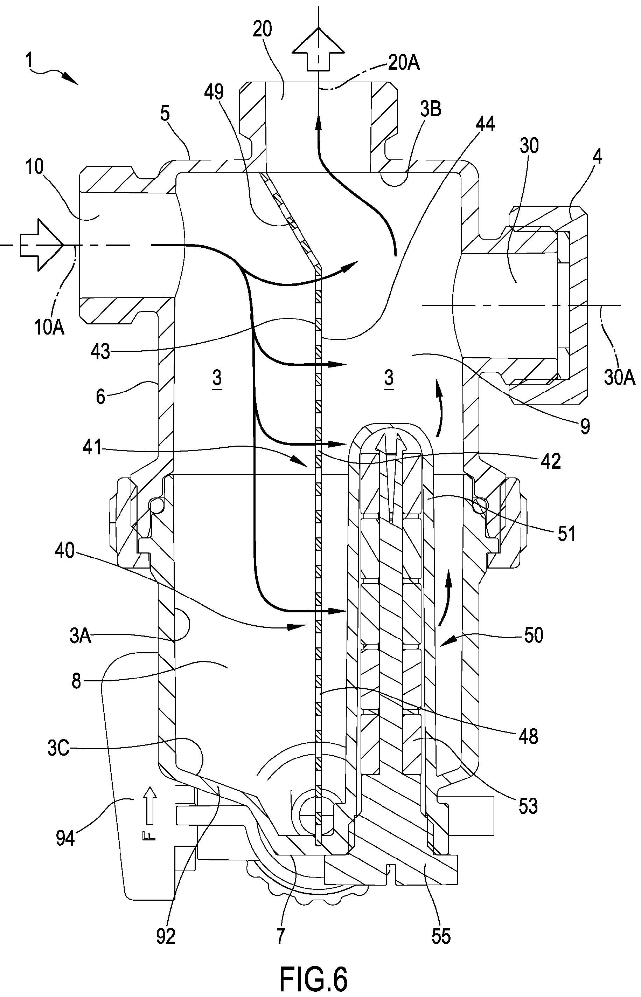

The operative configurations are represented in figures 6-9, and will be discussed in detail in the description below.

It should be considered that, in each of the four configurations identified above, irrespective of which opening receives the flow of fluid entering the device, which one sends the flow of filtered fluid exiting from the device, and which one is intercepted, the filtering septum 41 is always positioned in the same manner, and operates correctly without any need for the position or configuration thereof to be modified.

As shown by way of example in the embodiments illustrated in the figures, the passage between the first half-chamber 8 and the second half-chamber 9 takes place necessarily through the filtering septum 41. In other words, the first half-chamber 8 and the second half-chamber 9 communicate with each other only through the filtering septum 41.

The filtering septum 41 preferably has, at least in one portion thereof, a structure provided with a plurality of passages 42 that have a given filtering section, so that the passage of the fluid from a first side 43 of the filtering septum to a second side 44 of the filtering septum determines retention, on the first side 43, of the substances and particles present in the fluid and having dimensions greater than said filtering section. Conversely, in a wholly analogous manner, if the passage of the fluid takes place from the second side 44 of the filtering septum 41 to the first side 43 of the filtering septum 41, the retention of the substances and particles present in the fluid and having dimensions greater than the filtering section takes place on the second side 44.

The passages 42 are preferably through holes or openings between the first side and the second side. The passages are preferably distributed evenly over the whole structure of the filtering septum.

The structure of the separating septum preferably has a meshwork (or a grid or a network or a fabric) or a plurality of micro holes.

It should be observed that the holes 42 indicated in the figures are only approximate; said holes can have different sizes and/or shapes, based on the different applications and the desired filtering section.

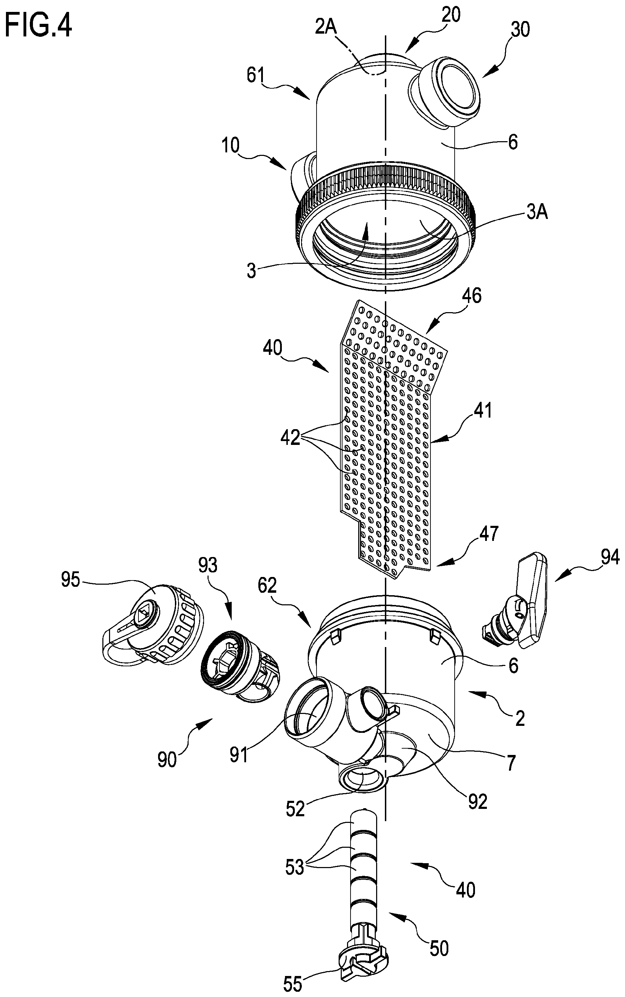

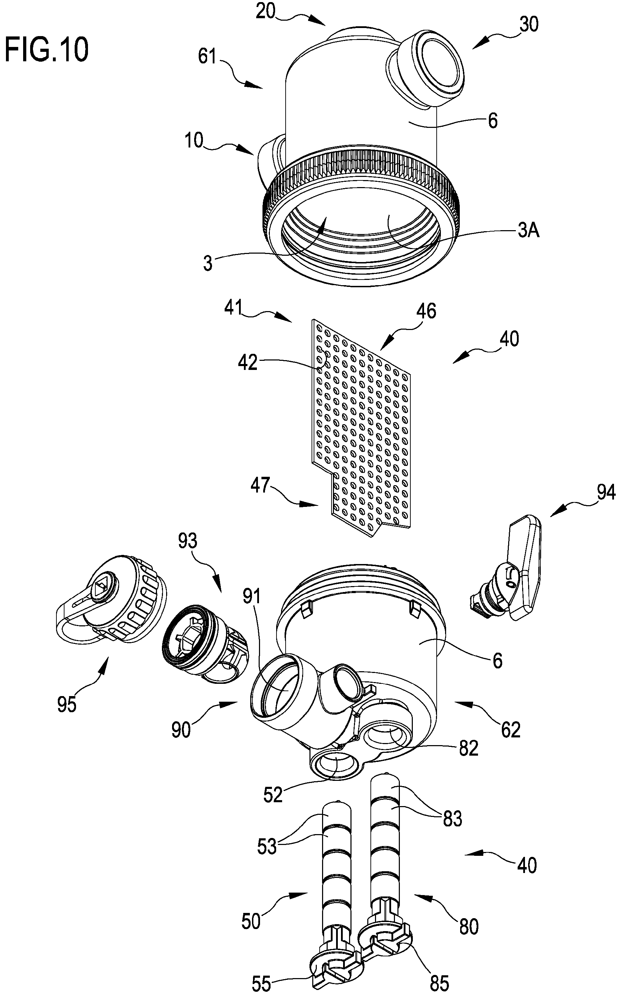

The filtering septum 41 has the form of a thin sheet or a membrane that extends longitudinally on a plane of extension 45 between an upper end 46 and a lower end 47 (with reference to the orientation shown in the figures, and in particular in figures 4 and 10).

The filtering septum 41 is preferably positioned in the filtration chamber 3 in such a manner that the first side 43 thereof faces the first inlet/outlet opening and the second side 44 thereof faces the third inlet/outlet opening 30 and the second inlet/outlet opening 20.

The filtering septum 41 is preferably configured to operate in a single position for use which is maintained for each one of said plurality of operative configurations taken on by the device, in which:
- it prevents the fluid from passing directly from the first opening 10 to the second opening 20 or from the first opening 10 to the third opening 30 without passing through the filtering septum;
- it prevents the fluid from passing directly from the second opening 20 to the first opening 10 or from the third opening 30 to the first opening 10 without passing through the filtering septum.

In short, the filtering septum 41 prevents the fluid from passing from the first half-chamber 8 to the second half-chamber 9, and from the second half-chamber 9 to the first half-chamber 8 without passing through the filtering septum. During use, the filtering septum 41 does not need to be moved when the operative configuration taken on by the device 1 changes.

In other words, the filtering septum 41 is configured to operate in a single position for use, which is maintained for each one of said plurality of operative configurations taken on by the device, in which:
- passage of the fluid from the first opening 10 to the second opening 20 or from the first opening 10 to the third opening 30 takes place by passage through the filtering septum 41;
- passage of the fluid from the second opening 20 to the first opening 10 or from the third opening 30 to the first opening 10 takes place by passage through the filtering septum 41.

In the figures showing the filtering septum 41, the upper end 46 of the filtering septum 41 along the plane of extension 45 faces upwards, whereas the lower end 47 faces downwards.

The filtering septum 41 is preferably made in one piece. The filtering septum 41 is preferably made of plastic or metallic material, for example stainless steel.

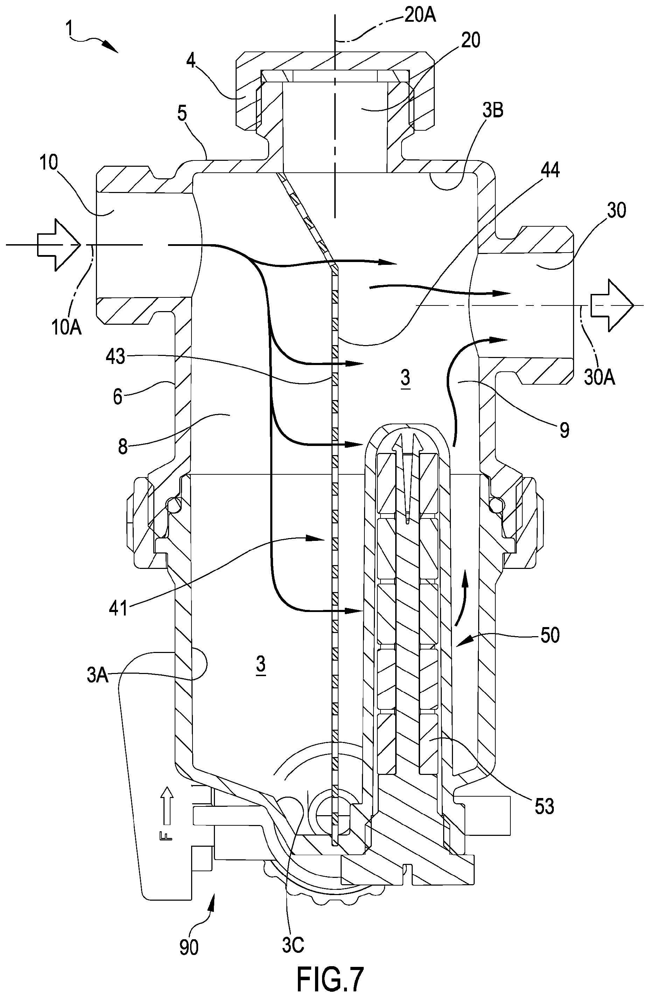

The aforesaid operative configurations preferably provide for passage of the fluid through the filtering septum 41 (from the first side 43 to the second side 44) when the fluid enters the device from the first inlet/outlet opening 10 and leaves the device from the second inlet/outlet opening 20 or from the third inlet/outlet opening 30 (figures 6 and 7).

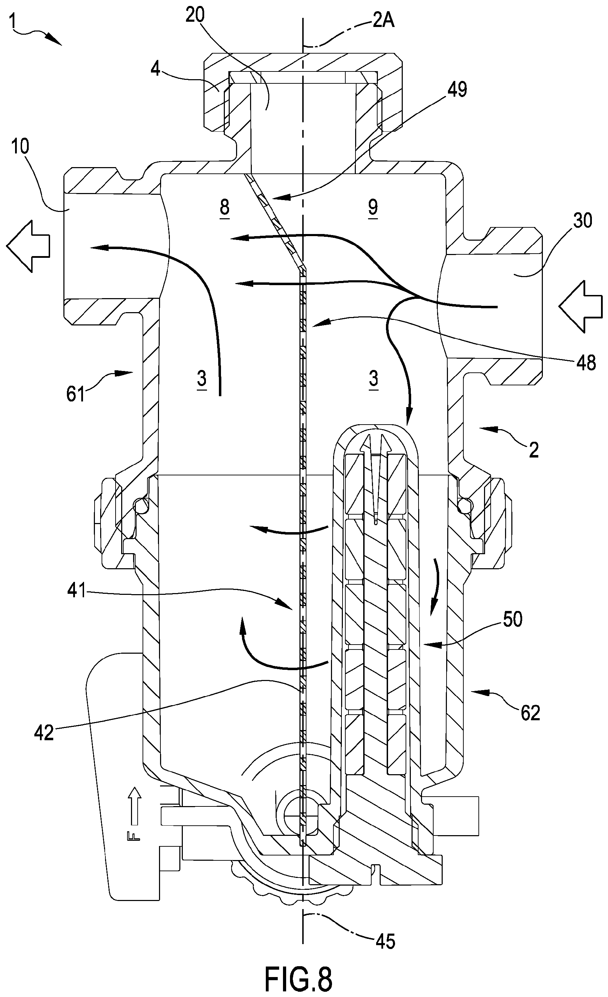

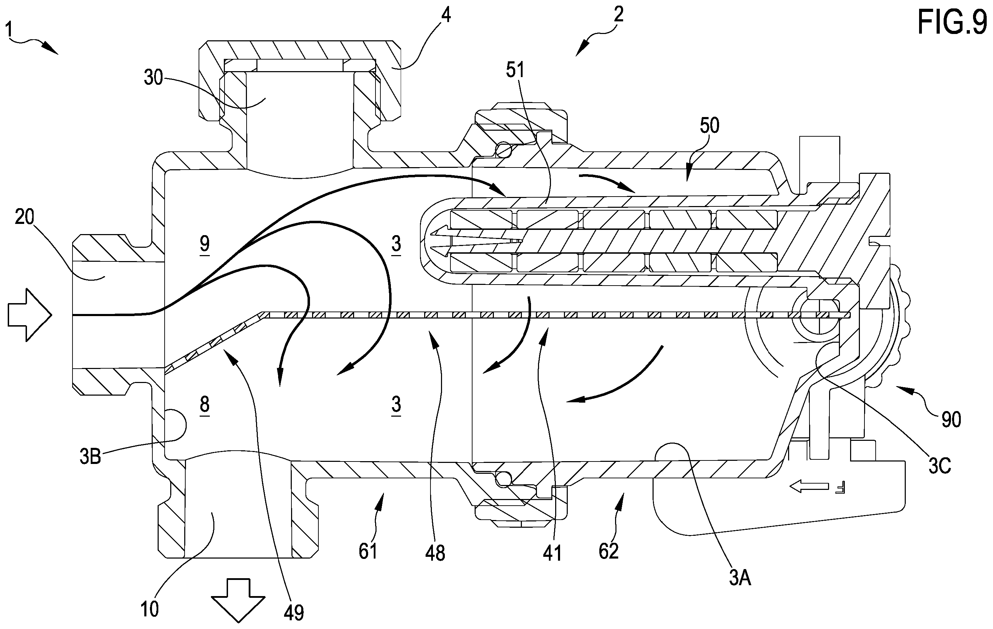

The aforesaid operative configurations preferably provide for passage of the fluid through the filtering septum 41 (from the second side 44 to the first side 43) when the fluid enters the device from the third inlet/outlet opening 30 or from the second inlet/outlet opening 20 and leaves the device from the first inlet/outlet opening 10 (figures 8 and 9).

According to the embodiments shown by way of example in the figures, the body 2 of the device has a substantially cylindrical conformation and has an axis of longitudinal extension 2A, a top surface 5, an external lateral surface 6 and a lower surface 7.

The body preferably has the conformation of a solid rotating about the longitudinal axis 2A and has a radial symmetry thereabout.

The first inlet/outlet opening 10 and the third inlet/outlet opening 30 are preferably located on the external lateral surface 6 of the body 2 of the device and on opposite sides with respect to the filtration chamber 3.

The second inlet/outlet opening 20 is preferably located on the upper surface 5 of the body 2 of the device.

The first inlet/outlet opening 10, the second inlet/outlet opening 20 and the third inlet/outlet opening 30 preferably have a circular cross section and each one has a respective central axis (the central axes of the openings are indicated in the figures by 10A, 20A and 30A, respectively).

The central axis 20A of the second inlet/outlet opening 20 preferably coincides with the axis of longitudinal extension 2A of the body 2 of the device.

The axis of longitudinal extension 2A of the body 2 of the device preferably lies on the plane of extension 45 of the filtering septum.

The respective central axis of the second inlet/outlet opening 20 preferably lies on the plane of extension 45 of the filtering septum 41.

The filtering septum 41 preferably has the conformation of a wall or a dividing element (between the two half-chambers 8 and 9).

The respective central axes 10A and 30A of the first inlet/outlet opening 10 and of the third inlet/outlet opening 30 preferably intersect (preferably in a same point inside the filtration chamber 3) the axis of longitudinal extension 2A of the body 2 of the device.

The respective central axes 10A and 30A of the first inlet/outlet opening 10 and of the third inlet/outlet opening 30 are preferably perpendicular to the longitudinal axis 2A of the body 2 of the device.

The respective central axes 10A and 30A of the first inlet/outlet opening 10 and of the third inlet/outlet opening 30 preferably coincide with each other.

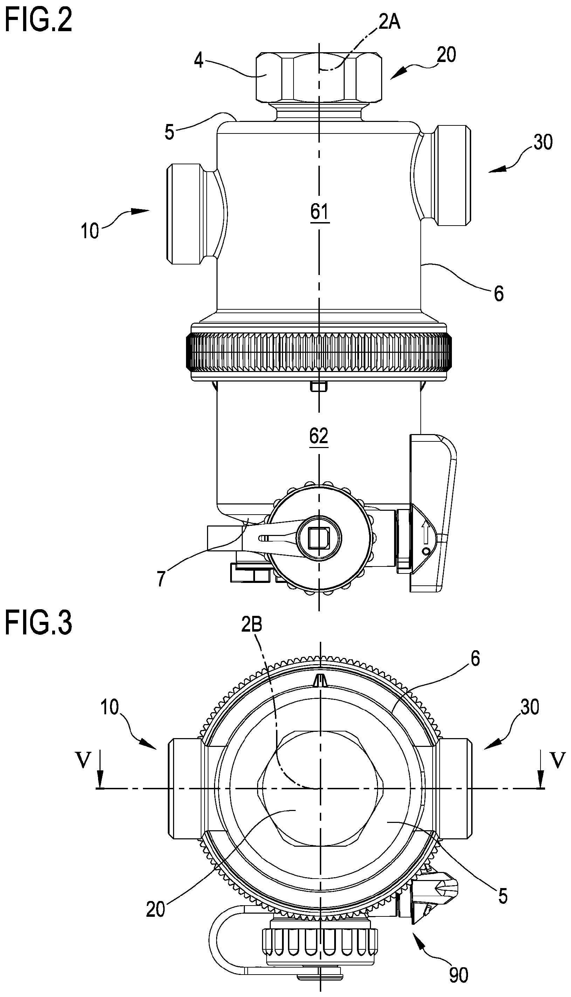

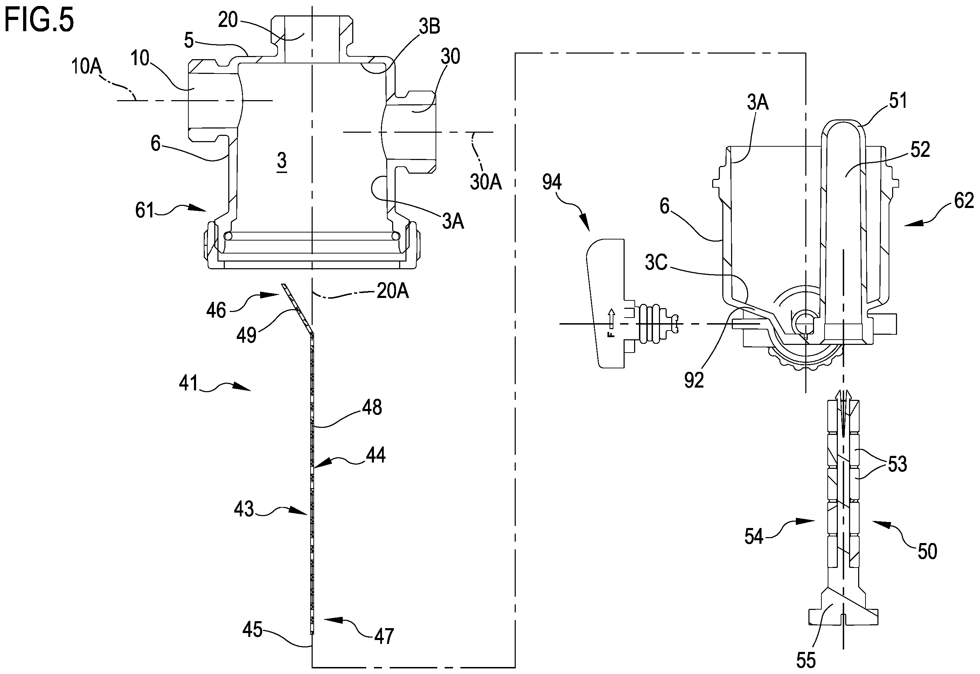

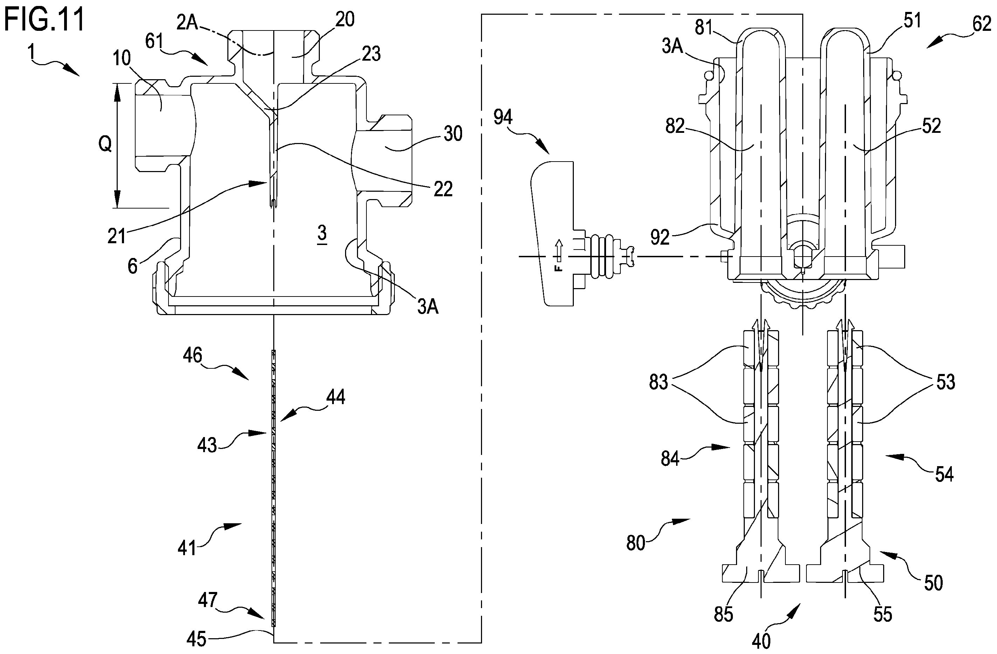

The body of the device preferably has a central plane of symmetry V-V on which the longitudinal axis 2A lies, said central plane of symmetry dividing the body 2 of the device into two substantially identical halves. The plane V-V is indicated in figure 3, and the sections in figures 5-9 and 11-12 are drawn with respect thereto.

The body of the device is substantially symmetrical also with respect to a median plane 2B, on which the longitudinal axis 2A lies and which is perpendicular to the central plane of symmetry V-V.

All three of the respective central axes 10A, 20A and 30A of the first opening 10, the second opening 20 and the third opening 30 preferably lie on the plane of symmetry V-V of the body 2 of the device.

The filtering septum 41 is preferably symmetrically subdivided into two halves by a plane (it corresponds to the median plane 2B in figure 3) on which the axis of longitudinal extension 2A of the body 2 lies.

The filtration chamber 3 is preferably delimited laterally by a lateral surface 3A, above by a top surface 3B and below by a bottom surface 3C of the body 2 of the device.

The filtering septum 41 is preferably positioned longitudinally between the bottom surface 3C and the top surface 3B of the filtration chamber of the body 2 of the device.

The filtering septum 41 preferably has two prevalent dimensions on the plane of extension 45 and a third smaller dimension perpendicular to the plane of extension.

The aforesaid two prevalent dimensions are a height of the filtering septum 41, along a direction coinciding with the axis of longitudinal extension 2A of the body, and a width of the filtering septum, along a direction perpendicular to the axis of longitudinal extension of the body.

The aforesaid height of the filtering septum 41 preferably substantially corresponds to the distance between the top surface 3B and the bottom surface 3C of the filtration chamber 3, so that the filtering septum is in contact at the top and bottom (preferably sealingly) with said surfaces of the filtration chamber 3.

The aforesaid width of the filtering septum preferably corresponds to a radial dimension (preferably a diameter) of the filtration chamber 3, so as to be in contact (preferably sealingly) with the lateral surface 3A of the filtration chamber 3. The third dimension of the filtering septum 41 preferably corresponds to the thickness thereof.

The filtering septum preferably subdivides the filtration chamber 3 into the first 8 and the second 9 half-chamber and is in contact with and/or has a fluid-tight seal with the lateral surface 3A, the top surface 3B and/or the bottom surface 3C.

Preferably, the first half-chamber 8 is defined between the filtering septum 41 (in particular the first side 43 thereof) and the first inlet/outlet opening 10, whilst the second half-chamber 9 is defined between the filtering septum 41 (in particular the second side 44 thereof) and the second 20 and third 30 inlet/outlet openings.

The first half-chamber 8 and the second half-chamber 9 preferably each have a prevalently semi-cylindrical conformation, and form overall - together with the filtering septum 41 placed between them - the single filtration chamber inside the body 2 of the device with a substantially or prevalently cylindrical conformation.

The filtering septum 41 is preferably arranged inside the filtration chamber 3 so that the subdivision of the filtration chamber into the first half-chamber 8 and second half-chamber 9 is of an axial type, i.e. substantially prevalently along the axis 2A of the body of the device.

As shown by way of example in the embodiment of figures 4-9, the filtering septum 41 may comprise a first portion 48, comprising the lower end 47 at the bottom thereof and aligned with the axis of longitudinal extension 2A of the body 2, and a second portion 49, extending continuously above the first portion and terminating with the upper end 46, said second portion being inclined laterally with respect to the first portion.

The second portion 49 extends inside the filtration chamber 3 between the upper end of the first portion 48 of the filtering septum and a point of the top surface 3B interposed between the first inlet/outlet opening 10 and the second inlet/outlet opening 20.

Preferably, the second portion 49 extends continuously above the first portion 48, and the two portions together define a filtering septum 41 in a single body, i.e. a monobloc.

The second portion 49 is preferably positioned inside the filtration chamber 3 between the axis of longitudinal extension 2A of the body 2 and the first inlet/outlet opening 10.

In other words, the second portion 49 extends inside the filtration chamber 3 entirely in one half of the filtration chamber comprised between the median plane 2B, perpendicular to the central plane of symmetry V-V of the body 2 on which the axis of longitudinal extension 2A extends, and the first inlet/outlet opening 10.

By way of example, the second portion forms a constant angle with respect to the first portion.

According to a further possible embodiment, shown by way of example in figures 10-14, the body of the device can be provided with a dividing wall 21 extending inside the filtration chamber 3 between the upper end of the filtering septum 41 and a point of the top surface interposed between the first inlet/outlet opening 10 and the second inlet/outlet opening 20.

The dividing wall preferably extends continuously with respect to the filtering septum 41, and together with the latter it contributes to subdividing the filtration chamber 3 longitudinally into the first half-chamber 8 and the second half-chamber 9.

The dividing wall 21 can preferably lie at least partially on the plane of extension 45 of the filtering septum and/or on the axis of longitudinal extension 2A of the body of the device.

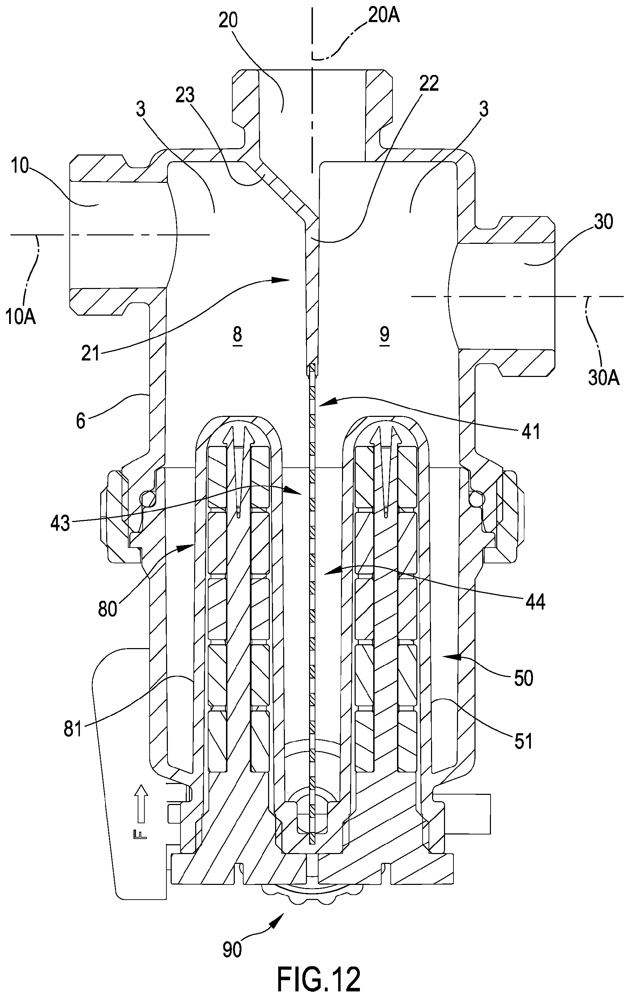

Starting from one side of the second inlet/outlet opening 20, said side facing the first inlet/outlet opening 10, the dividing wall 21 preferably extends inside the filtration chamber 3 according to a direction substantially consistent with the axis of longitudinal extension 2A of the body of the device and substantially to a height Q coinciding with the dimensions of the first inlet/outlet opening 10 on the external lateral surface 6 of the body 2 of the device and/or with the dimensions of the third inlet/outlet opening 30 on the external lateral surface 6 of the body 2 of the device (see for example figure 12). According to said embodiment, the filtering septum 41 is positioned longitudinally between the bottom surface 3C of the body 2 of the device and the dividing wall 21. The filtering septum 41 is preferably positioned in the filtration chamber 3 below the dividing wall so as to be below the three inlet/outlet openings 10, 20 and 30 along the axis of longitudinal extension 2A of the body 2 of the device, in a direction away from the second inlet/outlet opening 20.

According to the embodiment shown by way of example in figures 10-14, the dividing wall 21 can comprise a first portion 22 aligned with the filtering septum 41, and extending continuously from the upper end 46 thereof, and a second portion 23, extending continuously above the first portion 22 and inclined laterally with respect to the first portion 22. The second portion 23 extends inside the filtration chamber 3 between an upper end of the first portion 22 of the dividing wall 21 and a point of the top surface 3B interposed between the first inlet/outlet opening 10 and the second inlet/outlet opening 20. The second portion 23 preferably extends continuously above the first portion 22, and the two portions together contribute to defining a dividing wall 21 in a single body, i.e. a monobloc.

The dividing wall 21 preferably extends, starting from the second inlet/outlet opening 20, inside the filtration chamber 3 along a direction parallel to the axis of longitudinal extension 2A of the body 2 of the device and substantially to a height coinciding with the dimensions of the first inlet/outlet opening 10 on the external lateral surface 6 of the body 2.

The dividing wall 21 preferably extends, inside the filtration chamber 3, starting from the top surface 3B delimiting the filtration chamber 3 from above.

The dividing wall 21 is preferably fixed with respect to the body 2 of the device.

It should be observed that, both in the embodiment of figures 4-9 and in the embodiment of figures 10-14, the filtering septum 41 - or respectively the dividing wall 21 - ends at the top with a second portion (49 or, respectively, 23) that is inclined with respect to the first one (48 or, respectively, 22). That is because the filtering septum 41, or the dividing wall 21, must end at the top in a point interposed between the second opening 20 and the first opening 10: in fact, this enables the filtration chamber 3 to be subdivided into the first half-chamber 8 and second half-chamber 9. Given that in the embodiments the second inlet/outlet opening 20 has its axis coinciding with the axis of longitudinal extension 2A of the body 2, it is necessary for the filtering septum 41 or the dividing wall 21 to deviate (by inclining) from the axis 2A in order to correctly reach the point of the top surface 3B situated at the side of the second opening 20 and interposed between the latter and the first opening 10.

If the second inlet/outlet opening 20 were translated sideways with respect to the axis 2A, nearer to the third opening 30, the filtering septum 41 or - if present - the dividing wall 21 could have an entirely rectilinear, or planar conformation, and lie entirely on the axis of longitudinal extension 2A. The first inlet/outlet opening 10, the second inlet/outlet opening 20 and the third inlet/outlet opening 30 preferably have the same shape and size; more preferably, they are identical to one another.

The closure element 4 can preferably be selectively applied on any of the three inlet/outlet openings 10, 20 and 30, so as to determine the closure thereof. The first inlet/outlet opening 10, the second inlet/outlet opening 20 and the third inlet/outlet opening 30 preferably have respective interconnection means configured to fluidly connect the opening with external pipes, fittings or water valves. The interconnection means are preferably configured also to receive the closure element 4. The interconnection means preferably comprise threads or pressure connections or like mechanisms. The interconnection means of the first inlet/outlet opening 10, the second inlet/outlet opening 20 and the third inlet/outlet opening 30 are preferably structurally identical to one another. By way of example, the three inlet/outlet openings 10, 20 and 30 have standard sizes for the plumbing sector, for example a 1/4 inch, 1/2 inch, 3/4 inch or 1 inch diameter.

Reference will now be made in particular to figures 4-9.

The filtering members 40 preferably comprise at least one first magnetic filter 50 associated with the body 2 of the device and configured to collect and retain substances and ferrous particles (or in general particles having ferromagnetic properties) present in the fluid to be treated, in such a manner as to separate them from the fluid passing through the device.

The body 2 of the device preferably comprises at least a first hollow protuberance 51 that emerges axially from the bottom surface 3C towards the top surface 3B, said first hollow protuberance 51 defining, outside the body of the device, a first housing 52 that is elongated in shape, corresponding (negatively) to the first hollow protuberance 51 and accessible from the lower surface 7; the first housing 52 accommodates within it the first magnetic filter 50.

The first hollow protuberance 51 preferably emerges axially inside the second half-chamber 9 (as shown by way of example in figures 5-9). Alternatively, the first hollow protuberance can emerge axially inside said first half-chamber.

The magnetic filter 50 preferably comprises at least a first magnetic element 53, configured to generate a permanent magnetic field and inserted in the first housing 52 of the body 2 in such a manner as to act upon the fluid passing through the filtration chamber 3 and retain the substances and ferrous particles present in the fluid on the surface of the first hollow protuberance 51 inside the body 2 (in particular inside the chamber 3). In short, the first magnetic filter 50 is positioned "inside" the filtration chamber 3, even if it is physically in the first housing 52, which can be accessed from outside the body 2 without accessing the filtration chamber.

The first hollow protuberance 51, emerging from the bottom surface 3C, is preferably laterally distanced from the filtering septum 41, and is entirely contained within the second half-chamber 9 (or alternatively the first half-chamber).

In this configuration, although the first magnetic filter 50 is not in direct contact with the flow, i.e. it is not directly touched by the fluid circulating in the filtration chamber, thanks to its position and its magnetic effect, it allows the ferrous particles to be blocked on the first hollow protuberance inside the body.

In an alternative embodiment, not shown, the magnetic filter can be housed directly inside the filtration chamber.

The magnetic filter 50 preferably comprises a plurality of first magnetic elements 53 associated with one another so as to form a first rod-shaped magnetic cartridge 54 inserted axially in the first housing 52 of the body of the device.

The first magnetic cartridge 54 preferably comprises a first cap 55 suitable for being removably associated with the access opening of the first housing 52, on the lower surface 7, so as to close off said first magnetic cartridge 54 inside the first housing 52 and enable the extraction thereof as needed.

The body 2 preferably comprises a first half-body 61 and a second half-body 62, removably associated with each other, wherein:
- the assembly of the first half-body 61 with the second half-body 62 defines the filtration chamber 3, inside the body of the device, which is fluid tight towards the outside, with the exception of said first inlet/outlet opening 10, second inlet/outlet opening 20 and third inlet/outlet opening 30;
- the disassembly of the first half-body 61 from the second half-body 62 enables access to the filtration chamber 3 and the positioning of the filtering septum 41, as well as cleaning or maintenance operations. Preferably:
- the first half-body 61 comprises the first inlet/outlet opening 10, the second inlet/outlet opening 20, the third inlet/outlet opening 30, the top surface 3B and the dividing wall 21 (if present);
- the second half-body 62 comprises the bottom surface 3C and the first hollow protuberance 51.

The lateral surface 3A of the filtration chamber 3 is preferably defined in part by the first half-body 61 and in part by the second half-body 62.

The first half-body and the second half-body are preferably interconnected by means of a threaded coupling (not shown, of a known type).

The body 2 of the device preferably comprises a gasket interposed between the first half-body 61 and the second half-body 62 to ensure the tightness of the filtration chamber 3 in the assembled condition.

The four operative configurations introduced above are described below with reference to the specific figures 6, 7, 8 and 9. These configurations correspond to the different possible operating modes of the device of the present invention. As illustrated, the device 1 is configured to operate selectively in one of the operative configurations, according to installation requirements.

The first operative configuration is shown in figure 6; in this configuration:
- the first inlet/outlet opening 10 is destined to be set into communication with a line coming from a plumbing and heating system, particularly a heating water return line from a system of heating elements (for example heaters or radiators), so as to receive a flow of water to be subjected to filtration;
- the second inlet/outlet opening 20 is destined to be set into communication with a line directed to a boiler of the plumbing and heating system, so as to send thereto the flow of water following filtration;
- the third inlet/outlet opening 30 is intercepted by the closure element 4;
- the flow of fluid entering the first opening 10 flows into the first half-chamber 8 and is necessarily directed so as to pass through the filtering septum 41 from the first side 43, undergoing mechanical filtration and leaving from the second side 44 so as to flow into the second half-chamber 9;
- the fluid travels through the second half-chamber 9 where it undergoes magnetic filtration by the magnetic filter 50;
- the fluid is conveyed towards the second inlet/outlet opening 20, the third inlet/outlet opening 30 being intercepted.

The second operative configuration is shown in figure 7; in this configuration:
- the first inlet/outlet opening 10 is destined to be set into communication with a line coming from a plumbing and heating system, particularly a heating water return line from a system of heating elements (for example heaters or radiators), so as to receive a flow of water to be subjected to filtration;
- the second inlet/outlet opening 20 is intercepted by the closure element 4;
- the third inlet/outlet opening 30 is destined to be set into communication with a line directed to a boiler of the plumbing and heating system, so as to send thereto the flow of water following filtration;
- the flow of fluid entering the first opening 10 flows into the first half-chamber 8 and is necessarily directed so as to pass through the filtering septum 41 from the first side 43, undergoing mechanical filtration and leaving from the second side 44 so as to flow into the second half-chamber 9;
- the fluid travels through the second half-chamber 9 where it undergoes magnetic filtration by the magnetic filter 50;
- the fluid is conveyed towards the third inlet/outlet opening 30, the second inlet/outlet opening 20 being intercepted.

The third operative configuration is shown in figure 8; in this configuration:
- the third inlet/outlet opening 30 is destined to be set into communication with a line coming from a plumbing and heating system, particularly a heating water return line from a system of heating elements (for example heaters or radiators), so as to receive a flow of water to be subjected to filtration;
- the second inlet/outlet opening 20 is intercepted by the closure element 4;
- the first inlet/outlet opening 10 is destined to be set into communication with a line directed to a boiler of the plumbing and heating system, so as to send thereto the flow of water following filtration;
- the flow of fluid entering the third opening 30 flows into the second half-chamber 9 where it undergoes magnetic filtration by the magnetic filter 50, and - the second inlet/outlet opening 20 being intercepted - it is thus necessarily directed so as to pass through the filtering septum 41 from the second side 44, undergoing mechanical filtration and leaving from the first side 43 so as to flow into the first half-chamber 8;
- the fluid travels through the first half-chamber 8 and is conveyed towards the first inlet/outlet opening 10. The fourth operative configuration is shown in figure 9; in this configuration:
- the second inlet/outlet opening 20 is destined to be set into communication with a line coming from a plumbing and heating system, particularly a heating water return line from a system of heating elements (for example heaters or radiators), so as to receive a flow of water to be subjected to filtration;
- the third inlet/outlet opening 30 is intercepted by the closure element 4;
- the first inlet/outlet opening 10 is destined to be set into communication with a line directed to a boiler of the plumbing and heating system, so as to send thereto the flow of water following filtration;
- the flow of fluid entering the second inlet/outlet opening 20 flows into the second half-chamber 9 where it undergoes magnetic filtration by the first magnetic filter 50, and - the third inlet/outlet opening 30 being intercepted - it is thus necessarily directed so as to pass through from the second side 44 the filtering septum 41, undergoing mechanical filtration and leaving from the first side 43 so as to flow into the first half-chamber 8;
- the fluid travels through the first half-chamber 8 and is conveyed towards the first inlet/outlet opening 10. Preferably:
- in the first operative configuration, in the second operative configuration and in the third operative configuration the device is positioned vertically, i.e. with the axis of longitudinal extension 2A of the body 2 of the device vertically oriented;
- in the fourth operative configuration the device is positioned horizontally, i.e. with the axis of longitudinal extension 2A of the body 2 of the device horizontally oriented.

Observe, in figures 6-9, the arrows indicating the path of the fluid inside the device. In particular:
- in the first configuration (figure 6) the fluid enters from the first opening 10, descends into the first half-chamber 8, passes through the filtering septum 41 (being mechanically filtered) and rises into the second half-chamber 9 (where it is mechanically filtered) until exiting from the second opening 20 (the third one is closed); the impurities and the residue of the mechanical filtration remain in the first half-chamber 8, whereas the impurities and the residue of the magnetic filtration remain in the second half-chamber 9;
- in the second configuration (figure 7) the fluid enters from the first opening 10, descends into the first half-chamber 8, passes through the filtering septum 41 (being mechanically filtered) and rises into the second half-chamber 9 (where it is mechanically filtered) until exiting from the third opening 30 (the second one is closed); the impurities and the residue of the mechanical filtration remain in the first half-chamber 8, whilst the impurities and the residue of the magnetic filtration remain in the second half-chamber 9. If the boiler is positioned above the device, it is possible to connect an elbow fitting (90°) outside the third opening to rise towards the boiler.
- in the third configuration (figure 8) the fluid enters from the third opening 30, descends into the second half-chamber 9, where it is mechanically filtered, passes through the filtering septum 41 (being mechanically filtered) and rises into the first half-chamber 8 until exiting from the first opening 10 (the only one communicating with the first half-chamber); the impurities and the residue of both the magnetic filtration and the mechanical filtration remain in the second half-chamber 9. If the boiler is positioned above the device, it is possible to connect an elbow fitting (90°) outside the first opening to rise towards the boiler.
- in the fourth configuration (figure 9) the fluid enters from the second opening 20, passes horizontally into the second half-chamber 9, where it is mechanically filtered, passes through the filtering septum 41 (being mechanically filtered) and travels through the first half-chamber 8 until exiting from the first opening 10 (the only one communicating with the first half-chamber); the impurities and the residue of both the magnetic filtration and the mechanical filtration remain in the second half-chamber 9.

In short, in the third configuration the path of the fluid is opposite that of the second configuration, whereas in the fourth configuration the path of the fluid is opposite that of the first configuration.

It should be noted that in all four operative configurations, as represented, the opening that acts as an inlet for the fluid is horizontal, since it is destined to be connected to the return line from the system, which usually comes out of a wall under the boiler. In any case, the first, second and third configurations can also operate horizontally, and the fourth can also operate vertically. In this case it is possible to use suitable couplings, of a known type, to make the water connections between the openings acting as an inlet and outlet of the device and the pipes of the system to which they are to be connected.

It should be observed, moreover, that the paths of the fluid inside the device, in the four configurations, are obligatory thanks to the filtering septum and thanks to the structure and positioning of the elements of the body of the device.

Reference will now be made in particular to figures 10-14. According to the example embodiment shown in said figures, the body 2 of the device can comprise a second hollow protuberance 81 that emerges axially, in the filtration chamber 3, from the bottom surface 3C towards the top surface 3B, said second hollow protuberance 81 defining, outside the body 2 of the device, a second housing 82 that is elongated in shape, corresponding to the second hollow protuberance and accessible from the lower surface 7.

The second hollow protuberance 81 preferably emerges axially inside the half-chamber not occupied by the first hollow protuberance 51.

Preferably, the second hollow protuberance 81 emerges axially inside the first half-chamber 8, whereas the first hollow protuberance 51 emerges axially inside the second half-chamber 9.

The second hollow protuberance 81, emerging from the bottom surface, is preferably laterally distanced from the filtering septum 41, and is entirely contained within the first half-chamber (or alternatively the second half-chamber if the first half-chamber contains the first hollow protuberance).

The first magnetic filter 50 can preferably be associated selectively with the first hollow protuberance 51 or the second hollow protuberance 81 of the body 2 of the device, depending on the selected operative configuration.

This can be done by removing the first cap 55 of the first magnetic filter and moving it into the desired housing 52 or 82.

When the first magnetic filter 50 is associated with the first hollow protuberance 51, it preferably carries out a magnetic filtration of the fluid in transit in the second half-chamber 9, whereas when the first magnetic filter 50 is associated with the second hollow protuberance 81 it carries out a magnetic filtration of the fluid in transit in the first half-chamber 8. In short, the device can comprise two hollow protuberances and a single magnetic filter 50, to be inserted selectively into the first housing 52 or the second housing 82. In both cases, since the operative configurations always provide for a passage of the fluid between the two half-chambers (and always a passage through the filtering septum 41), magnetic filtering by at least the magnetic filter 50 is ensured, irrespective of the housing in which it is inserted.

In a possible embodiment the filtering members 40 can further comprise a second magnetic filter 80 associated with the body 2 of the device and configured to collect and retain substances and particles having ferromagnetic properties present in the fluid to be treated, in such a manner as to separate them from the fluid passing through the device. The second magnetic filter 80 is preferably structurally identical to the first magnetic filter 50.

The second magnetic filter 80 preferably comprises at least one second magnetic element 83, configured to generate a permanent magnetic field, inserted in the second housing of the body 2 in such a manner as to act upon the fluid passing through the filtration chamber 3 and retain the ferromagnetic substances and particles present in the fluid on the surface of the second hollow protuberance 81 inside the body of the device.

The second magnetic element 83 is preferably structurally identical to the first magnetic element 53.

The second magnetic filter 80 preferably comprises a plurality of second magnetic elements 83 associated with one another so as to form a second rod-shaped magnetic cartridge 54 inserted axially in the second housing 82 of the body of the device.

The second magnetic cartridge 84 preferably comprises a second cap 85 suitable for being removably associated with the access opening of the second housing 82, on the lower surface 7, so as to close off said second magnetic cartridge 84 inside the second housing 82 and enable the extraction thereof as needed.

Preferably, the second magnetic filter 80 is destined to be housed in the second housing 82, whereas the first magnetic filter 50 is destined to be housed in the first housing 52.

It should be observed that the embodiment of figures 10-14 operates in the same operative configurations as described with reference to figures 6-9.

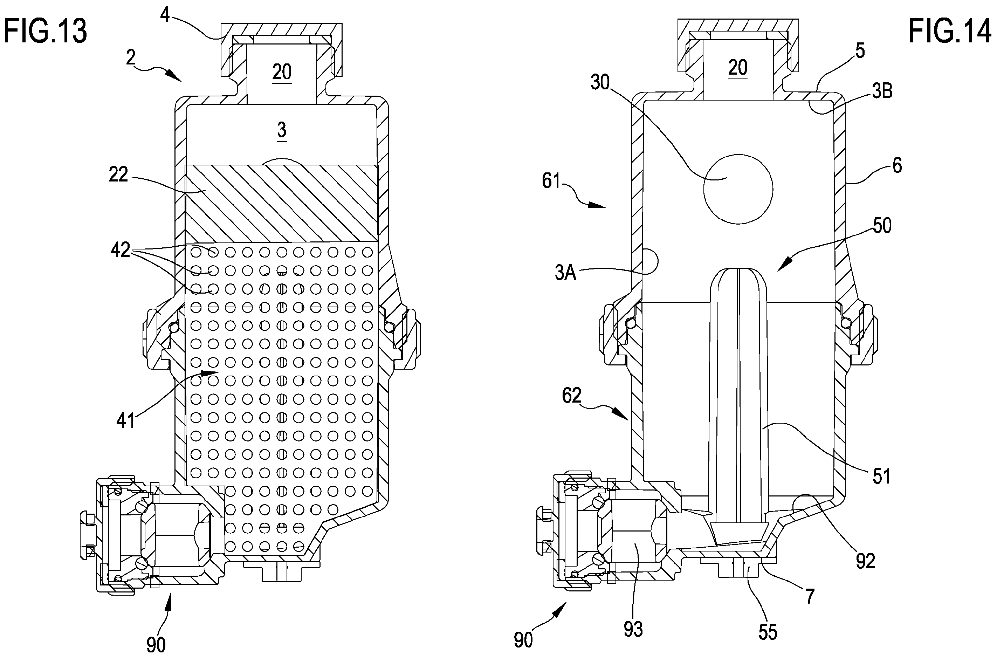

As shown both in figures 6-9 and figures 10-12, and further illustrated in figures 13-14, the device can preferably comprise a drain cock 90 configured to enable the filtration chamber 3 to be emptied without disassembling the device from the system in which it is installed, without disconnecting the first, second, and third inlet/outlet openings from the respective lines, and without disassembling the body of the device (in particular the first half-body 61 and the second half-body 62).

The drain cock 90 is preferably positioned at a drain opening 91 located on the bottom surface 3C of the body 2 of the device and selectively enables the contents of the filtration chamber 3 to be emptied in order to carry out cleaning or maintenance of the device.

The drain opening 91 is preferably located on the bottom surface, straddling the lower end 47 of the filtering septum 41 in such a manner as to be laterally in communication with both the first half-chamber 8 and the second half-chamber 9, but without setting the first and the second half-chamber in communication with each other.

The drain opening 91 is preferably located at the lower end of an inclined portion 92 of the bottom surface 3C, extending downwards, that is, away from the top surface, with respect to the rest of the bottom surface, said inclined portion 92 enabling the material filtered inside the filtration chamber, particularly by the filtering septum 41, to be conveyed towards the drain opening, by gravity or settling.

The drain cock 90 can preferably be operated selectively in a closed state, in which the drain opening 91 is intercepted and does not allow the fluid to leave the filtration chamber 3, or an open state, in which the drain opening 91 is set in communication with the outside of the device 1.

The drain cock 90 preferably comprises an obturator 93 active on the drain opening 91 in such a manner as to intercept the drain opening, in said closed state, or leave the passage through the drain opening free, in said open state. The drain cock 90 preferably comprising a knob 94, or a similar manual or automatic means for selecting the position of the obturator 93.

The drain cock preferably comprises a removable safety cap 95 set downstream of the obturator 93 and configured, when it is located in position, to close the drain opening even if the knob takes the obturator into the open state.

It should be observed that, advantageously, the drain cock is configured, thanks to the positioning of the drain opening, to draw from both the half-chambers 8 and 9, so as to enable an effective discharge of the filtered material and cleaning of both half-chambers. This is particularly relevant since, as illustrated above, according to the operative configuration and the type of connection made for the first, the second and the third inlet opening, the material can be filtered on the first side 43 or second side 44 of the filtering septum 41, and thus accumulate in the first half-chamber 8 or in the second half-chamber 9. In either case the drain cock 90 enables easy cleaning of both half-chambers.

In a possible alternative embodiment, shown by way of example in the figures, the first inlet/outlet opening 10 and the third inlet/outlet opening 30 are not aligned with each other, i.e. the respective central axes 10A and 30A of the first inlet/outlet opening 10 and the third inlet/outlet opening 30 do not coincide with each other, but are rather offset. This means that the first inlet/outlet opening 10 and the third inlet/outlet opening 30 are positioned, on the external lateral surface 6 of the body 2, at different heights with respect to the second opening 20 along the axis of longitudinal extension. This makes it possible to have two different longitudinal distances, or distances between centres, between the first opening 10 and the second opening 20 and between the third opening 30 and the second opening 20. In this manner it is possible, advantageously, to select which opening to use as an inlet or as an outlet, either the first opening 10 or the third opening 30, simply by rotating the entire body of the device by 180°.

This can be useful based on the position of the return pipe of the system (to which the device inlet is to be connected) and of the pipe leading back into the boiler (to which the device outlet is to be connected), in particular when operating in the fourth configuration. In such a case, for example, based on the distance of the pipe delivering into the boiler from the wall of installation, it may be useful to select either the first or the third inlet opening as the fluid outlet of the device.

In general, irrespective of the operative configuration selected, the device 1 is usually directly supported by the two lines of the system on which it is installed (or on which the openings acting as inlet and outlet are installed).

The method for filtering a fluid circulating in a plumbing and heating system according to the present invention preferably corresponds to the operating mode of the device 1. Essentially, the method comprises:
- arranging a device 1, preferably according to what has been described;
- identifying a line coming from the plumbing and heating system, particularly a heating water return line from a system of heating elements, carrying a flow of water to be subjected to filtration;
- identifying a line directed to a boiler of the plumbing and heating system, this line carrying a flow of water that has undergone filtration;
- operating the device selectively in one of the aforesaid operative configurations.

The invention thus conceived is susceptible of numerous modifications and variants, all falling within the scope of the inventive concept, and the components mentioned may be replaced by other technically equivalent elements.

The invention achieves important advantages. First of all, as emerges clearly from the above description, the invention enables at least some of the drawbacks of the prior art to be overcome.

The device of the present invention enables an effective filtration of a fluid circulating in a plumbing and heating system, and achieving it in every operative configuration. In particular, irrespective of which opening acts as an inlet and which as an outlet, the filtration of the fluid is always optimal. In fact, as amply described above and illustrated in the figure, in every operative configuration the entire flow of fluid effectively undergoes both mechanical filtration and magnetic filtration, without any portion of fluid passing through the device without being fully filtered, as occurs by contrast in the prior art solutions. Therefore, the device of the present invention combines versatility of use, as three inlet/outlet openings are available, and the possibility of deciding which one will act as an inlet for the fluid and which one as an outlet, with maximum efficiency in terms of filtration in every operative configuration.

This allows the device to be adapted to a large number and different types of boilers or other components of a heating system and to be able to be installed even in very limited spaces, while at the same time effectively performing the required filtering operations. In short, the device of the present invention is capable of operating with consistent high performances irrespective of the mode of installation inside a plumbing and heating system

This is made possible, in particular, thanks to the conformation and positioning of the filtering septum, which enables the two half-chambers to be defined and the fluid to be directed in such a manner that it always (i.e. in every operative configuration) passes through the mechanical filter (i.e. the filtering septum) and by the magnetic filter (or magnetic filters if two are present): this makes the filtration always optimal, overcoming the problems of the prior art.

The path of the fluid in the filtration chamber, always first through one half-chamber and then through the other, always enables an effective double filtration to be obtained. The filtering septum is in fact designed to handle all four different configurations: once the inlet opening and outlet opening have been chosen (and the remaining opening closed), the device is already ready to operate, without there being any need to modify the position of the elements of the device. In particular, the filtering septum enables the operation of the device in the different configurations without needing to be moved or repositioned.

Furthermore, the device of the present invention is characterised by high operating reliability and a lower predisposition to faults and malfunctions and it can be assembled, disassembled, cleaned and maintained in a simple and rapid manner.

Finally, the device of the present invention is characterised by a competitive cost and a simple, rational structure.

## Claims

1. A device (1) for filtering a fluid circulating in a plumbing and heating system, said device (1) comprising a body (2) of the device which defines therewithin a filtration chamber (3) that is destined to have a fluid to be subjected to filtration pass through it, said body being provided with:
- a first inlet/outlet opening (10), which sets said filtration chamber (3) in communication with the outside of the device and that is configured to be associated with a line so as to receive therefrom, or to send thereto, fluid entering, or exiting from, said body of the device;
- a second inlet/outlet opening (20), which sets said filtration chamber (3) in communication with the outside of the device and that is configured to be associated with a respective line so as to receive therefrom, or to send thereto, fluid incoming to, or exiting from, said body of the device;
- a third inlet/outlet opening (30), which sets said filtration chamber (3) in communication with the outside of the device and that is configured to be associated with a respective line so as to receive therefrom, or to send thereto, fluid incoming to, or exiting from, said body of the device;
the device being configured to bring about a passage of fluid through said filtration chamber (3), in a selective manner according to a plurality of operative configurations, from one opening among said first inlet/outlet opening (10), said second inlet/outlet opening (20), and said third inlet/outlet opening (30) to another opening among said first inlet/outlet opening (10), said second inlet/outlet opening (20), and said third inlet/outlet opening (30),
the device further comprising filtering members (40) that are at least partially housed inside said filtration chamber (3), or associated with said body (2) of the device, and operatively interposed between said first inlet/outlet opening, said second inlet/outlet opening and said third inlet/outlet opening to carry out filtering of the fluid passing through the filtration chamber;
the device further comprising a closure element (4) that is configured to selectively intercept one opening among said first inlet/outlet opening (10), said second inlet/outlet opening (20), and said third inlet/outlet opening (30), and in that said plurality of operative configurations comprise at least:
- a first operative configuration, in which said first opening (10) receives a flow of fluid incoming to the device, said second opening (20) sends the flow of filtered fluid exiting from the device and said third opening (30) is intercepted by said closure element (4);
- a second operative configuration, in which said first opening (10) receives a flow of fluid incoming to the device, said third opening (30) sends the flow of filtered fluid exiting from the device and said second opening (20) is intercepted by said closure element (4);
- a third operative configuration, in which said third opening (30) receives a flow of fluid incoming to the device, said first opening (10) sends the flow of filtered fluid exiting from the device and said second opening (20) is intercepted by said closure element (4);
- a fourth operative configuration, in which said second opening (20) receives a flow of fluid incoming to the device, said first opening (10) sends the flow of filtered fluid exiting from the device and said third opening (30) is intercepted by said closure element (4);
the device being **characterized in that** said filtering members (40) comprise at least one filtering septum (41) configured to perform a mechanical separation of substances and solid particles present in the fluid to be treated from the fluid in which they are suspended, said filtering septum (41) having the form of a thin sheet or membrane that extends longitudinally over a plane of extension (45) between an upper end (46) and a lower end (47);
and wherein said filtering septum (41) is arranged inside said filtration chamber (3) so as to subdivide the filtration chamber into a first half-chamber (8) and a second half-chamber (9), wherein:
- the first half-chamber (8) is in fluid communication with the first inlet/outlet opening, without passage through the filtering septum;
- the second half-chamber (9) is in fluid communication with the second inlet/outlet opening and with the third inlet/outlet opening, without passage through the filtering septum;
in such a manner that in each one of said plurality of operative configurations, to pass from said first half-chamber (8) to said second half-chamber (9), or vice versa, the fluid transiting in the filtration chamber (3) passes through said filtering septum (41).

2. The device (1) according to claim 1, wherein the passage between the first half-chamber (8) and the second half-chamber (9) necessarily takes place through the filtering septum (41), and/or wherein the first half-chamber (8) and the second half-chamber (9) are connected with each other only through the filtering septum (41).

3. The device (1) according to claim 1 or 2, wherein the filtering septum (41) has, at least in one portion thereof, a structure provided with a plurality of passages (42) that have a given filtering section, so that the passage of the fluid from a first side (43) of the filtering septum to a second side (44) of the filtering septum determines retention, on the first side (43), of the substances and particles present in the fluid and having dimensions greater than said filtering section, and vice versa the passage of the fluid from the second side (44) to the first side (43) determines retention, on the second side (44), of the substances and particles present in the fluid and having dimensions greater than said filtering section.

4. The device (1) according to any one of the preceding claims, wherein the filtering septum (41) is positioned in the filtration chamber (3) in such a manner that the first side (43) thereof faces the first inlet/outlet opening and the second side (44) thereof faces the third inlet/outlet opening (30) and/or the second inlet/outlet opening (20).

5. The device (1) according to any one of the preceding claims, wherein the filtering septum (41) is configured to operate in a single position for use which is maintained for each one of said plurality of operative configurations taken on by the device, in which:
- it prevents the fluid from passing directly from the first opening (10) to the second opening (20) or from the first opening (10) to the third opening (30), without passing through the filtering septum;
- it prevents direct passage of the fluid from the second opening (20) to the first opening (10) or from the third opening (30) to the first opening (10) without passing through the filtering septum;
and/or wherein the filtering septum (41) is configured to operate in a single position for use, which is maintained for each one of said plurality of operative configurations taken on by the device, in which:
- passage of the fluid from the first opening (10) to the second opening (20) or from the first opening (10) to the third opening (30) takes place by passage through the filtering septum;
- passage of the fluid from the second opening (20) to the first opening (10) or from the third opening (30) to the first opening (10) takes place by passing through the filtering septum.

6. The device (1) according to any one of the preceding claims, wherein said operative configurations provide for passage of the fluid through the filtering septum (41), from the first side (43) to the second side (44), when the fluid enters the device from the first inlet/outlet opening (10) and leaves the device from the second inlet/outlet opening (20) or from the third inlet/outlet opening (30), and/or wherein said operative configurations provide for passage of the fluid through the filtering septum (41), from the second side (44) to the first side (43), when the fluid enters the device from the second inlet/outlet opening (20) or from the third inlet/outlet opening (30) and leaves the device from the first inlet/outlet opening (10).

7. The device (1) according to any one of the preceding claims, wherein the filtration chamber is delimited laterally by a lateral surface (3A), above by a top surface (3B) and below by a bottom surface (3C) of the body (2) of the device, and wherein the filtering septum is positioned longitudinally between the bottom surface (3C) and the top surface (3B) of the filtration chamber of the body (2) of the device, and/or wherein the filtering septum has two prevalent dimensions, on said plane of extension (45), and a third smaller dimension, perpendicularly to said plane of extension, wherein said two prevalent dimensions are a height of the filtering septum along a direction coinciding with an axis of longitudinal extension (2A) of the body (2) and a width of the filtering septum along a direction perpendicular to the axis of longitudinal extension (2A) of the body (2), and wherein said height of the filtering septum substantially corresponds to the distance between the top surface (3B) and the bottom surface (3C) of the filtration chamber (3), so that at the top and bottom the septum is **in** contact with the surfaces of the filtration chamber (3), and wherein said width of the filtering septum corresponds to a radial dimension of the filtration chamber (3), so that it is in contact with the lateral surface (3A) of the filtration chamber (3).

8. The device (1) according to any one of the preceding claims, wherein the body (2) of the device is provided with a dividing wall (21) extending inside the filtration chamber (3) between the upper end (46) of the filtering septum and a point of the top surface interposed between the first inlet/outlet opening (10) and the second inlet/outlet opening (20), and wherein the dividing wall (21) extends continuously with respect to the filtering septum (41), and together with the latter, it contributes to dividing the filtration chamber longitudinally into the first half-chamber and the second half-chamber, and/or wherein the dividing wall (21) lies at least partially on the plane of extension of the filtering septum and/or on the axis of longitudinal extension (2A) of the body of the device, and/or wherein starting from one side of the second inlet/outlet opening (20), said side facing the first inlet/outlet opening (10), the dividing wall (21) extends, inside the filtration chamber (3) according to a direction substantially consistent with the axis of longitudinal extension (2A) of the body of the device and substantially to a height (Q) coinciding with the dimensions of the first inlet/outlet opening (10) on the external lateral surface (6) of the body (2) of the device and/or with the dimensions of the third inlet/outlet opening (30) on the external lateral surface (6) of the body (2) of the device, and/or wherein the filtering septum is positioned longitudinally between the bottom surface (3C) of the body (2) of the device and the dividing wall (21).

9. The device (1) according to any one of the preceding claims, wherein the filtering members (40) comprise at least a first magnetic filter (50) associated with the body (2) of the device and configured to collect and retain substances and particles having ferromagnetic properties and that are present in the fluid to be treated, in such a manner as to separate them from the fluid passing through the device, and wherein the body (2) of the device comprises at least a first hollow protuberance (51) that emerges axially, in the filtration chamber, from said bottom surface (3C) towards said top surface (3C), said first hollow protuberance (51) defining, outside the body (2) of the device, a first housing (52) that is elongated in shape, corresponding to the first hollow protuberance (51) and accessible from the lower surface (7), said first housing (52) accommodating the first magnetic filter (50), and/or wherein said first hollow protuberance (51) emerges axially inside said second half-chamber or, alternatively, inside said first half-chamber, and/or wherein the first magnetic filter (50) comprises at least a first magnetic element (53) that is configured to generate a permanent magnetic field and inserted in said first housing (52) of the body (2) in such a manner as to act upon the fluid passing through the filtration chamber (3) and retain the ferromagnetic substances and particles present in the fluid on the surface of said first hollow protuberance (51) inside the body of the device.

10. The device (1) according to any one of the preceding claims, said device (1) being configured to operate selectively, when in use, in one of the following operative configurations:
- a first operative configuration, in which:
- the first inlet/outlet opening (10) is destined to be set into communication with a line coming from a plumbing and heating system, particularly a hot water return line from a system of heating elements, so as to receive a flow of water to be subjected to filtration;
- the second inlet/outlet opening (20) is destined to be set into communication with a line directed to a boiler of the plumbing and heating system, so as to send thereto the flow of water following filtration;
- the third inlet/outlet opening (30) is intercepted by a closure element (4);
- the flow of fluid incoming to the first opening (10) flows into the first half-chamber (8) and is necessarily directed so as to pass through the filtering septum (41) from the first side (43), undergoing mechanical filtration and leaving from the second side (44) so as to flow into the second half-chamber (9);
- the fluid travels through the second half-chamber (9) where it undergoes magnetic filtration by the first magnetic filter (50);
- the fluid is conveyed towards the second inlet/outlet opening (20), the third inlet/outlet opening (30) being intercepted;
- a second operative configuration, in which:
- the first inlet/outlet opening (10) is destined to be set into communication with a line coming from a plumbing and heating system, particularly a hot water return line from a system of heating elements, so as to receive a flow of water to be subjected to filtration;
- the second inlet/outlet opening (20) is intercepted by a closure element (4);
- the third inlet/outlet opening (30) is destined to be set into communication with a line directed to a boiler of the plumbing and heating system, so as to send thereto the flow of water following filtration;
- the flow of fluid incoming to the first opening (10) flows into the first half-chamber (8) and is necessarily directed so as to pass through the filtering septum (41) from the first side (43), undergoing mechanical filtration and leaving from the second side (44) so as to flow into the second half-chamber (9);
- the fluid travels through the second half-chamber (9) where it undergoes magnetic filtration by the first magnetic filter (50);
- the fluid is conveyed towards the third inlet/outlet opening (30), the second inlet/outlet opening (20) being intercepted;
- a third operative configuration, in which:
- the third inlet/outlet opening (30) is destined to be set into communication with a line coming from a plumbing and heating system, particularly a hot water return line from a system of heating elements, so as to receive a flow of water to be subjected to filtration;
- the second inlet/outlet opening (20) is intercepted by a closure element (4);
- the first inlet/outlet opening (10) is destined to be set into communication with a line directed to a boiler of the plumbing and heating system, so as to send thereto the flow of water following filtration;
- the flow of fluid incoming to the third opening (30) flows into the second half-chamber (9) where it undergoes magnetic filtration by the first magnetic filter (50) and as the second inlet/outlet opening (20) is intercepted, it is thus necessarily directed so as to pass through the filtering septum (41) from the second side (44), undergoing mechanical filtration and leaving from the first side (43) so as to flow into the first half-chamber (8);
- the fluid travels through the first half-chamber (8) and is conveyed towards the first inlet/outlet opening (10);
- a fourth operative configuration, in which:
- the second inlet/outlet opening (20) is destined to be set into communication with a line coming from a plumbing and heating system, particularly a hot water return line from a system of heating elements, so as to receive a flow of water to be subjected to filtration;
- the third inlet/outlet opening (30) is intercepted by a closure element (4);
- the first inlet/outlet opening (10) is destined to be set into communication with a line directed to a boiler of the plumbing and heating system, so as to send thereto the flow of water following filtration;
- the flow of fluid incoming to the second inlet/outlet opening (20) flows into the second half-chamber (9) where it undergoes magnetic filtration by the first magnetic filter (50) and as the third inlet/outlet opening (30) is intercepted, it is thus necessarily directed so as to pass through the filtering septum (41) from the second side (44), undergoing mechanical filtration and leaving from the first side (43) so as to flow into the first half-chamber (8);
- the fluid travels through the first half-chamber (8) and is conveyed towards the first inlet/outlet opening (10).

11. The device (1) according to claim 9 or 10, wherein the body (2) of the device comprises a second hollow protuberance (81) that emerges axially, in the filtration chamber (3), from said bottom surface (3C) towards said top surface (3B), said second hollow protuberance (81) defining, outside the body (2) of the device, a second housing (82) that is elongated in shape, corresponding to the second hollow protuberance (51) and accessible from the lower surface (7), and/or wherein said second hollow protuberance (81) emerges axially inside the half-chamber, between the first (8) and the second half-chamber (9) not occupied by the first hollow protuberance (51), or wherein said second hollow protuberance (81) emerges axially inside said first half-chamber (8), whereas said first hollow protuberance (51) emerges axially inside said second half-chamber (9), and/or wherein said first magnetic filter (50) can be selectively housed in the first hollow protuberance (51) or in the second hollow protuberance (81) of the body (2) of the device, according to the operative configuration selected.

12. The device (1) according to the preceding claim, wherein the filtering members (40) comprise a second magnetic filter (80) associated with the body (2) of the device and configured to collect and retain substances and particles having ferromagnetic properties and that are present in the fluid to be treated, in such a manner as to separate them from the fluid passing through the device, and/or wherein said second magnetic filter (80) is structurally identical to said first magnetic filter (50), and/or wherein said second magnetic filter (80) comprises at least a second magnetic element (83) that is configured to generate a permanent magnetic field and inserted in said second housing of the body (2) in such a manner as to act upon the fluid passing through the filtration chamber (3) and retain the ferromagnetic substances and particles present in the fluid on the surface of said second hollow protuberance (81) inside the body of the device, and wherein said second magnetic filter (80) is housed in said second housing (82).

13. The device (1) according to any one of the preceding claims comprises a drain cock (90) configured to enable the filtration chamber (3) to be emptied without disassembling the device from the system in which it is installed, without disconnecting the first, second, and third inlet/outlet openings from the respective lines, and without disassembling the body (2) of the device, wherein the drain cock (90) is positioned at a drain opening (91) located on the bottom surface (3C) of the body (2) straddling the lower end (47) of the filtering septum (41) in such a manner as to be in communication with the first half-chamber (8) and with the second half-chamber (9), without putting the first and the second half-chamber in communication with each other, and/or wherein the drain opening (91) is located at the lower end of an inclined portion (90) of the bottom surface (3C), extending downwards, that is, away from the top surface (3B), with respect to the rest of the bottom surface, said inclined portion (92) enabling the material filtered inside the filtration chamber, particularly by the filtering septum, to be conveyed towards the drain opening (91) by gravity or settling, and/or wherein the drain cock (90) can be operated selectively in a closed state, in which the drain opening (91) is intercepted and does not allow the fluid to leave the filtration chamber (3), or an open state, in which the drain opening (91) is set in communication with the outside of the device.

14. A method for filtering a fluid circulating in a plumbing and heating system, said method comprising the steps of:
- arranging at least one device (1) for filtering a fluid according to any one of the preceding claims;
- identifying a line coming from a plumbing and heating system, particularly a hot water return line from a system of heating elements, carrying a flow of water to be subjected to filtration;
- identifying a line directed to a boiler of the plumbing and heating system, this line carrying a flow of water that has undergone filtration to the boiler;
- operating the device (1) selectively in one of said operative configurations.

## Patentansprüche

1. Vorrichtung (10) zum Filtern eines Fluids, welches in einem Sanitär- und Wärmesystem zirkuliert, wobei die Vorrichtung (1) einen Körper (2) der Vorrichtung umfasst, welcher darin eine Filtrationskammer (3) definiert, welche dazu bestimmt ist, von einem Fluid durchlaufen zu werden, um einer Filtration ausgesetzt zu sein, wobei der Körper bereitgestellt ist, mit:
- einer ersten Einlass-/Auslassöffnung (10), welche die Filtrationskammer (3) in Kommunikation mit dem Äußeren der Vorrichtung setzt und welche dazu eingerichtet ist, mit einer Leitung assoziiert zu sein, um davon Fluid zu empfangen oder dahin zu senden, welches in oder aus dem Körper der Vorrichtung eintritt oder austritt;
- einer zweiten Einlass-/Auslassöffnung (20), welche die Filtrationskammer (3) in Kommunikation mit dem Äußeren der Vorrichtung setzt und welche dazu eingerichtet ist, mit einer entsprechenden Leitung assoziiert zu sein, um davon Fluid zu empfangen oder dahin zu senden, welches in oder aus dem Körper der Vorrichtung eintritt oder austritt;
- einer dritten Einlass-/Auslassöffnung (30), welche die Filtrationskammer (3) in Kommunikation mit dem Äußeren der Vorrichtung setzt und welche dazu eingerichtet ist, mit einer entsprechenden Leitung assoziiert zu sein, um davon Fluid zu empfangen oder dahin zu senden, welches in oder aus dem Körper der Vorrichtung eintritt oder austritt;
wobei die Vorrichtung dazu eingerichtet ist, eine Fluiddurchfluss durch die Filtrationskammer (3) zu verursachen, in einer selektiven Weise gemäß einer Mehrzahl von Betriebskonfigurationen, von einer Öffnung unter der ersten Einlass-/Auslassöffnung (10), der zweiten Einlass-/Auslassöffnung (20), und der dritten Einlass-/Auslassöffnung (30) zu einer anderen Öffnung unter der ersten Einlass-/Auslassöffnung (10), der zweiten Einlass-/Auslassöffnung (20), und der dritten Einlass-/Auslassöffnung (30),
wobei die Vorrichtung ferner Filterelemente (40) umfasst, welche wenigstens teilweise in der Filtrationskammer (3) untergebracht sind oder mit dem Körper (2) der Vorrichtung assoziiert sind und zwischen der ersten Einlass-/Auslassöffnung, der zweiten Einlass-/Auslassöffnung und der dritten Einlass-/Auslassöffnung betriebsfähig eingefügt sind, um ein Filtern des Fluids auszuführen, welches die Filtrationskammer durchläuft;
wobei die Vorrichtung ferner ein Schließelement (4) umfasst, welches dazu eingerichtet ist, eine Öffnung unter der ersten Einlass-/Auslassöffnung (10), der zweiten Einlass-/Auslassöffnung (20), und der dritten Einlass-/Auslassöffnung (30), selektive abzustellen, und wobei die Mehrzahl von Betriebskonfigurationen wenigstens umfassen:
- eine erste Betriebskonfiguration, in welcher die erste Öffnung (10) einen Fluss eines Fluids empfängt, welcher in die Vorrichtung eintritt, wobei die zweite Öffnung (20) den Fluss des gefilterten Fluids sendet, welcher aus der Vorrichtung austritt, und die dritte Öffnung (30) durch das Schließelement (4) abgestellt ist;
- eine zweite Betriebskonfiguration, in welcher die erste Öffnung (10) einen Fluss eines Fluids empfängt, welcher in die Vorrichtung eintritt, wobei die dritte Öffnung (30) den Fluss des gefilterten Fluids sendet, welcher aus der Vorrichtung austritt, und die zweite Öffnung (20) durch das Schließelement (4) abgestellt ist;
- eine dritte Betriebskonfiguration, in welcher die dritte Öffnung (30) einen Fluss eines Fluids empfängt, welcher in die Vorrichtung eintritt, wobei die erste Öffnung (10) den Fluss des gefilterten Fluids sendet, welcher aus der Vorrichtung austritt, und die zweite Öffnung (20) durch das Schließelement (4) abgestellt ist;
- eine vierte Betriebskonfiguration, in welcher die zweite Öffnung (20) einen Fluss eines Fluids empfängt, welcher in die Vorrichtung eintritt, wobei die erste Öffnung (10) den Fluss des gefilterten Fluids sendet, welcher aus der Vorrichtung austritt, und die dritte Öffnung (30) durch das Schließelement (4) abgestellt ist;
wobei die Vorrichtung **dadurch gekennzeichnet ist, dass** die Filterelemente (40) wenigstens eine Filtertrennwand (41) umfassen, welche dazu eingerichtet ist, eine mechanische Trennung von Substanzen und Festpartikeln durchzuführen, welche in dem Fluid vorhanden sind, um von dem Fluid behandelt zu sein, in welchem sie aufgelöst sind, wobei die Filtertrennwand (41) die Form einer dünnen Bahn oder einer Membrane aufweist, welche sich longitudinal über einer Ebene einer Erstreckung (45) zwischen einem oberen Ende (46) und einem unteren Ende (47) erstreckt;
und wobei die Filtertrennwand (41) in der Filtrationskammer (3) angeordnet ist, um die Filtrationskammer in eine erste Halbkammer (8) und eine zweite Halbkammer (9) zu untertrennen, wobei:
- die erste Halbkammer (8) mit der ersten Einlass-/Auslassöffnung in Fluidkommunikation steht, ohne einen Durchgang durch die Filtertrennwand;
- die zweite Halbkammer (9) mit der zweiten Einlass-/Auslassöffnung und mit der dritten Einlass-/Auslassöffnung in Fluidkommunikation steht, ohne einen Durchgang durch die Filtertrennwand;
in einer Weise, dass in jeder der Mehrzahl von Betriebskonfigurationen, um von der ersten Halbkammer (8) zu der zweiten Halbkammer (9) durchzulaufen, oder umgekehrt, das Fluid, welches die erste Filtrationskammer (3) durchquert, die Filtertrennwand (41) durchläuft.

2. Vorrichtung (1) nach Anspruch 1, wobei der Durchgang zwischen der ersten Halbkammer (8) und der zweiten Halbkammer (9) zwangsläufig durch die Filtertrennwand (41) stattfindet, und/oder wobei die erste Halbkammer (8) und die zweite Halbkammer (9) miteinander nur durch die Filtertrennwand (41) verbunden sind.

3. Vorrichtung (1) nach Anspruch 1 oder 2, wobei die Filtertrennwand (41) wenigstens in einem Abschnitt davon eine Struktur aufweist, welche mit einer Mehrzahl von Durchgängen (42) bereitgestellt ist, welche einen vorgegebenen Filterbereich aufweisen, sodass der Durchgang des Fluids von einer ersten Seite (43) der Filtertrennwand zu einer zweiten Seite (44) der Filtertrennwand einen Aufstau, an der ersten Seite (43), der Substanzen und Partikel bestimmt, welche in dem Fluid vorhanden sind, und Abmessungen größer als der Filterbereich aufweist, und der Durchgang des Fluids von der zweiten Seite (44) zu der ersten Seite (43) umgekehrt einen Aufstau, an der zweiten Seite (44), der Substanzen und der Partikel bestimmt, welche in dem Fluid vorhanden sind, und Abmessungen größer als der Filterbereich aufweist.

4. Vorrichtung (1) nach einem der vorhergehenden Ansprüche, wobei die Filtertrennwand (41) in der Filtrationskammer (3) in einer derartigen Weise positioniert ist, dass die erste Seite (43) davon der ersten Einlass-/Auslassöffnung zugewandt ist und die zweite Seite (44) davon der dritten Einlass-/Auslassöffnung (30) und/oder der zweiten Einlass-/Auslassöffnung (20) zugewandt ist.

5. Vorrichtung (1) nach einem der vorhergehenden Ansprüche, wobei die Filtertrennwand (41) dazu eingerichtet ist, in einer einzigen Verwendungsposition betrieben zu sein, welche für jede der Mehrzahl von Betriebskonfigurationen beibehalten ist, welche von der Vorrichtung angenommen sind, in welcher:
- es verhindert ist, dass das Fluid von der ersten Öffnung (10) zu der zweiten Öffnung (20) oder von der ersten Öffnung (10) zu der dritten Öffnung (30) direkt durchläuft, ohne die Filtertrennwand zu durchlaufen;
- ein direkter Durchlauf des Fluids von der zweiten Öffnung (20) zu der ersten Öffnung (10) oder von der dritten Öffnung (30) zu der ersten Öffnung (10) verhindert ist, ohne die Filtertrennwand zu durchlaufen;
und/oder wobei die Filtertrennwand (41) dazu eingerichtet ist, in einer einzigen Verwendungsposition betrieben zu sein, welche für jede der Mehrzahl von Betriebskonfigurationen beibehalten ist, welche von der Vorrichtung angenommen sind, in welcher:
- ein Durchlauf des Fluids von der ersten Öffnung (10) zu der zweiten Öffnung (20) oder von der ersten Öffnung (10) zu der dritten Öffnung (30) durch Durchlauf durch die Filtertrennwand stattfindet;
- ein Durchlauf des Fluids von der zweiten Öffnung (20) zu der ersten Öffnung (10) oder von der dritten Öffnung (30) zu der ersten Öffnung (10) durch Durchlauf durch die Filtertrennwand stattfindet.

6. Vorrichtung (1) nach einem der vorhergehenden Ansprüche, wobei die Betriebskonfigurationen einen Durchlauf des Fluids durch die Filtertrennwand (41) bereitstellen, von der ersten Seite (43) zu der zweiten Seite (44), wenn das Fluid in die Vorrichtung von der ersten Einlass-/Auslassöffnung (10) eintritt und die Vorrichtung aus der zweiten Einlass-/Auslassöffnung (20) oder der dritten Einlass-/Auslassöffnung (30) verlässt, und/oder wobei die Betriebskonfigurationen einen Durchlauf des Fluids durch die Filtertrennwand (41) bereitstellen, von der zweiten Seite (44) zu der ersten Seite (43), wenn das Fluid in die Vorrichtung von der zweiten Einlass-/Auslassöffnung (20) oder der dritten Einlass-/Auslassöffnung (30) eintritt und die Vorrichtung aus der ersten Einlass-/Auslassöffnung (10) verlässt.

7. Vorrichtung (1) nach einem der vorhergehenden Ansprüche, wobei die Filtrationskammer begrenzt ist, seitlich durch eine seitliche Fläche (3A), von oben durch eine obere Fläche (3B) und von unten durch eine untere Fläche (3C) des Körpers (2) der Vorrichtung, und wobei die Filtertrennwand zwischen der unteren Fläche (3C) und der oberen Fläche (3B) der Filtrationskammer des Körpers (2) der Vorrichtung longitudinal positioniert ist, und/oder wobei die Filtertrennwand zwei vorwiegende Dimensionen, an der Erstreckungsebene (45), und eine dritte kleinere Dimension aufweist, welche senkrecht zu der Erstreckungsebene ist, wobei die beiden vorwiegenden Dimensionen eine Höhe der Filtertrennwand entlang einer Richtung, welche mit einer Achse einer Longitudinalerstreckung (2A) des Körpers (2) zusammenfällt, und eine Breite der Filtertrennwand entlang einer Richtung sind, welche senkrecht zu der Achse der Longitudinalerstreckung (2A) des Körpers (2) ist, und wobei die Höhe der Filtertrennwand im Wesentlichen der Distanz zwischen der oberen Fläche (3B) und der unteren Fläche (3C) der Filtrationskammer (3) entspricht, sodass an der Oberseite und an der Unterseite die Trennwand mit den Flächen der Filtrationskammern (3) in Kontakt ist, und wobei die Breite der Filtertrennwand einer radialen Dimension der Filtrationskammer (3) entspricht, sodass sie mit der seitlichen Fläche (3A) der Filtrationskammer (3) in Kontakt ist.

8. Vorrichtung (1) nach einem der vorhergehenden Ansprüche, wobei der Körper (2) der Vorrichtung mit einer Abtrennwandung (21) bereitgestellt ist, welche sich innerhalb der Filtrationskammer (3) zwischen dem oberen Ende (46) der Filtertrennwand und einem Punkt der oberen Fläche erstreckt, welcher zwischen der ersten Einlass-/Auslassöffnung (10) und der zweiten Einlass-/Auslassöffnung (20) eingefügt ist, und wobei die Abtrennwandung (21) sich in Bezug zu der Filtertrennwand (41) kontinuierlich erstreckt, und zusammen mit der letzteren, sie dazu beiträgt, die Filtrationskammer longitudinal in die erste Halbkammer und die zweite Halbkammer zu teilen, und/oder wobei die Abtrennwandung (21) wenigstens teilweise in der Erstreckungsebene der Filtertrennwand und/oder auf der Achse der Longitudinalerstreckung (2A) des Körpers der Vorrichtung liegt, und/oder wobei, startend von einer Seite der zweiten Einlass-/Auslassöffnung (20), wobei die Seite der ersten Einlass-/Auslassöffnung (10) zugewandt ist, die Abtrennwandung (21) sich, innerhalb der Filtrationskammer (3), gemäß einer Richtung, welche im Wesentlichen mit der Achse der Longitudinalerstreckung (2A) des Körpers der Vorrichtung übereinstimmt, und im Wesentlichen einer Höhe (Q) erstreckt, welche mit den Dimensionen der ersten Einlass-/Auslassöffnung (10) an der äußeren seitlichen Fläche (6) des Körpers (2) der Vorrichtung und/oder mit den Dimensionen der dritten Einlass-/Auslassöffnung (30) an der äußeren seitlichen Fläche (6) des Körpers (2) der Vorrichtung zusammenfällt, und/oder wobei die Filtertrennwand zwischen der unteren Fläche (3C) des Körpers (2) der Vorrichtung und der Abtrennwandung (21) longitudinal positioniert ist.

9. Vorrichtung (1) nach einem der vorhergehenden Ansprüche, wobei die Filterelemente (40) wenigstens einen ersten magnetischen Filter (50) umfassen, welcher mit dem Körper (2) der Vorrichtung assoziiert ist und dazu eingerichtet ist, Substanzen und Partikel zu sammeln und aufzunehmen, welche ferromagnetische Eigenschaften aufweisen und welche in dem zu behandelnden Fluid vorhanden sind, in einer Weise, um sie von dem Fluid zu trennen, welches die Vorrichtung durchläuft, und wobei der Körper (2) der Vorrichtung wenigstens eine erste hohle Protuberanz (51) umfasst, welche, in der Filtrationskammer, von der unteren Fläche (3C) zu der oberen Fläche (3C) axial herausragt, wobei die erste hohle Protuberanz (51), außerhalb des Körpers (2) der Vorrichtung, ein erstes Gehäuse (52) definiert, welches in einer Form elongiert ist, welche der ersten hohle Protuberanz (51) entspricht, und von der unteren Fläche (7) zugänglich ist, wobei das erste Gehäuse (52) den ersten magnetischen Filter (50) aufnimmt, und/oder wobei die erste hohle Protuberanz (51) innerhalb der zweiten Halbkammer oder alternativ innerhalb der ersten Halbkammer axial herausragt und/oder wobei der erste magnetische Filter (50) wenigstens ein erstes magnetisches Element (53) umfasst, welches dazu eingerichtet ist, ein permanentes magnetisches Feld zu erzeugen, und in das erste Gehäuse (52) des Körpers (2) in einer derartigen Weise eingefügt ist, um auf einen Durchlauf des Fluids durch die Filtrationskammer (3) hin zu agieren und die ferromagnetischen Substanzen und Partikel, welche in dem Fluid vorhanden sind, an der Fläche der ersten hohlen Protuberanz (51) in dem Körper der Vorrichtung aufzunehmen.

10. Vorrichtung (1) nach einem der vorhergehenden Ansprüche, wobei die Vorrichtung (1) dazu eingerichtet ist, in Betrieb in einer der folgenden Betriebskonfigurationen wahlweise betrieben zu sein:
- eine erste Betriebskonfiguration, in welcher:
- die erste Einlass-/Auslassöffnung (10) dazu bestimmt ist, mit einer Leitung in Kommunikation gesetzt zu sein, welche von einem Sanitär- und Wärmesystem kommt, insbesondere einer Warmwasserrückführleitung von einem System von Wärmeelementen, um einen Wasserfluss zu erhalten, welcher einer Filtration zu unterziehen ist;
- die zweite Einlass-/Auslassöffnung (20) dazu bestimmt ist, mit einer Leitung in Kommunikation gesetzt zu sein, welche zu einem Boiler des Sanitär- und Wärmesystems gerichtet ist, um dahin den Wasserfluss zu senden, anschließend einer Filtration;
- die dritte Einlass-/Auslassöffnung (30) durch ein Schließelement (4) abgestellt ist;
- der Fluidfluss, welcher in die erste Öffnung (10) eintritt, in die erste Halbkammer (8) fließt und zwangsläufig ausgerichtet ist, um durch die Filtertrennwand (41) von der ersten Seite (43) zu fließen, einer mechanischen Filtration ausgesetzt zu sein und aus der zweiten Seite (44) auszutreten, um in die zweite Halbkammer (9) zu fließen;
- das Fluid durch die zweite Halbkammer (9) durchläuft, wo es einer magnetischen Filtration durch den ersten magnetischen Filter (50) ausgesetzt ist;
- das Fluid der zweiten Einlass-/Auslassöffnung (20) zugeführt ist, wobei die dritte Einlass-/Auslassöffnung (30) abgestellt ist;
- eine zweite Betriebskonfiguration, in welcher:
- die erste Einlass-/Auslassöffnung (10) dazu bestimmt ist, mit einer Leitung in Kommunikation gesetzt zu sein, welche von einem Sanitär- und Wärmesystem kommt, insbesondere einer Warmwasserrückführleitung von einem System von Wärmeelementen, um einen Wasserfluss zu erhalten, welcher einer Filtration zu unterziehen ist;
- die zweite Einlass-/Auslassöffnung (20) durch ein Schließelement (4) abgestellt ist;
- die dritte Einlass-/Auslassöffnung (30) dazu bestimmt ist, mit einer Leitung in Kommunikation gesetzt zu sein, welche zu einem Boiler des Sanitär- und Wärmesystems gerichtet ist, um dahin den Wasserfluss zu senden, anschließend einer Filtration;
- der Fluidfluss, welcher in die erste Öffnung (10) eintritt, in die erste Halbkammer (8) fließt und zwangsläufig ausgerichtet ist, um durch die Filtertrennwand (41) von der ersten Seite (43) zu fließen, einer mechanischen Filtration ausgesetzt zu sein und aus der zweiten Seite (44) auszutreten, um in die zweite Halbkammer (9) zu fließen;
- das Fluid durch die zweite Halbkammer (9) durchläuft, wo es einer magnetischen Filtration durch den ersten magnetischen Filter (50) ausgesetzt ist;
- das Fluid der dritten Einlass-/Auslassöffnung (30) zugeführt ist, wobei die zweite Einlass-/Auslassöffnung (20) abgestellt ist;
- eine dritte Betriebskonfiguration, in welcher:
- die dritte Einlass-/Auslassöffnung (30) dazu bestimmt ist, mit einer Leitung in Kommunikation gesetzt zu sein, welche von einem Sanitär- und Wärmesystem kommt, insbesondere einer Warmwasserrückführleitung von einem System von Wärmeelementen, um einen Wasserfluss zu erhalten, welcher einer Filtration zu unterziehen ist;
- die zweite Einlass-/Auslassöffnung (20) durch ein Schließelement (4) abgestellt ist;
- die erste Einlass-/Auslassöffnung (10) dazu bestimmt ist, mit einer Leitung in Kommunikation gesetzt zu sein, welche zu einem Boiler des Sanitär- und Wärmesystems gerichtet ist, um dahin den Wasserfluss zu senden, anschließend einer Filtration;
- der Fluidfluss, welcher in die dritte Öffnung (30) eintritt, dort in die zweite Halbkammer (9) fließt, wo es einer magnetischen Filtration durch den ersten magnetischen Filter (50) ausgesetzt ist und, wenn die zweite Einlass-/Auslassöffnung (20) abgestellt ist, es daher zwangsläufig bestimmt ist, die Filtertrennwand (41) von der zweiten Seite (44) zu durchlaufen, einer mechanischen Filtration ausgesetzt zu sein und aus der ersten Seite (43) auszutreten, um in die erste Halbkammer (8) zu fließen;
- das Fluid durch die erste Halbkammer (8) fließt und der ersten Einlass-/Auslassöffnung (10) zugeführt ist;
- eine vierte Betriebskonfiguration, in welcher:
- die zweite Einlass-/Auslassöffnung (20) dazu bestimmt ist, mit einer Leitung in Kommunikation gesetzt zu sein, welche von einem Sanitär- und Wärmesystem kommt, insbesondere einer Warmwasserrückführleitung von einem System von Wärmeelementen, um einen Wasserfluss zu erhalten, welcher einer Filtration zu unterziehen ist;
- die dritte Einlass-/Auslassöffnung (30) durch ein Schließelement (4) abgestellt ist;
- die erste Einlass-/Auslassöffnung (10) dazu bestimmt ist, mit einer Leitung in Kommunikation gesetzt zu sein, welche zu einem Boiler des Sanitär- und Wärmesystems gerichtet ist, um dahin den Wasserfluss zu senden, anschließend einer Filtration;
- der Fluidfluss, welcher in die zweite Öffnung (20) eintritt, dort in die zweite Halbkammer (9) fließt, wo es einer magnetischen Filtration durch den ersten magnetischen Filter (50) ausgesetzt ist und, wenn die dritte Einlass-/Auslassöffnung (30) abgestellt ist, es daher zwangsläufig bestimmt ist, die Filtertrennwand (41) von der zweiten Seite (44) zu durchlaufen, einer mechanischen Filtration ausgesetzt zu sein und aus der ersten Seite (43) auszutreten, um in die erste Halbkammer (8) zu fließen;
- das Fluid durch die erste Halbkammer (8) fließt und der ersten Einlass-/Auslassöffnung (10) zugeführt ist.

11. Vorrichtung (1) nach Anspruch 9 oder 10, wobei der Körper (2) der Vorrichtung eine zweite hohle Protuberanz (81) umfasst, welche, in der Filtrationskammer (3), von der unteren Fläche (3C) zu der oberen Fläche (3B) axial herausragt, wobei die zweite hohle Protuberanz (81), außerhalb des Körpers (2) der Vorrichtung, ein zweites Gehäuse (82) definiert, welches in einer Form elongiert ist, welche der zweiten hohle Protuberanz (51) entspricht, und von der unteren Fläche (7) zugänglich ist, und/oder wobei die zweite hohle Protuberanz (81) innerhalb der Halbkammer zwischen der ersten (8) und der zweiten Halbkammer (9), welche nicht durch die erste hohle Protuberanz (51) besetzt ist, axial herausragt, oder wobei die zweite hohle Protuberanz (81) in die erste Halbkammer (8) axial herausragt, wobei die erste hohle Protuberanz (51) in die zweite Halbkammer (9) axial herausragt, und/oder wobei der erste magnetische Filter (50) wahlweise in der ersten hohle Protuberanz (51) oder in der zweiten hohlen Protuberanz (81) des Körpers (2) der Vorrichtung untergebracht sein kann, gemäß der ausgewählten Betriebskonfiguration.

12. Vorrichtung (1) nach dem vorhergehenden Anspruch, wobei die Filterelemente (40) einen zweiten magnetischen Filter (80) umfassen, welcher mit dem Körper (2) der Vorrichtung assoziiert ist und dazu eingerichtet ist, Substanzen und Partikel zu sammeln und aufzunehmen, welche ferromagnetische Eigenschaften aufweisen und welche in dem zu behandelnden Fluid vorhanden sind, in einer Weise, um sie von dem Fluid zu trennen, welches die Vorrichtung durchläuft, und/oder wobei der zweite magnetische Filter (80) strukturell identisch mit dem ersten magnetischen Filter (50) ist, und/oder wobei der zweite magnetische Filter (80) wenigstens ein zweites magnetisches Element (83) umfasst, welches dazu eingerichtet ist, ein permanentes magnetisches Feld zu erzeugen, und in das zweite Gehäuse des Körpers (2) in einer derartigen Weise eingefügt ist, um auf das Fluid hin zu agieren, welches die Filtrationskammer (3) durchläuft, und die ferromagnetischen Substanzen und Partikel, welche in dem Fluid vorhanden sind, an der Fläche der zweiten hohlen Protuberanz (81) in dem Körper der Vorrichtung aufzunehmen, und wobei der zweite magnetische Filter (80) in dem zweiten Gehäuse (82) untergebracht ist.

13. Vorrichtung (1) nach einem der vorhergehenden Ansprüche, welches einen Ablaufhahn (90) umfasst, welcher dazu eingerichtet ist, zu ermöglichen, die Filtrationskammer (3) zu entleeren, ohne die Vorrichtung von dem System zu demontieren, in welchem es installiert ist, ohne die ersten, zweiten und dritten Einlass-/Auslassöffnungen von den jeweiligen Leitungen zu lösen, und ohne den Körper (2) der Vorrichtung zu demontieren, wobei der Ablaufhahn (90) an einer Ablauföffnung (91) positioniert ist, welche an der unteren Fläche (3C) des Körpers (2) angeordnet ist, welches das untere Ende (47) der Filtertrennwand (41) in einer derartigen Weise überspannt, um mit der ersten Halbkammer (8) und mit der zweiten Halbkammer (9) in Kommunikation zu stehen, ohne die erste und zweite Halbkammer miteinander in Kommunikation zu bringen, und/oder wobei die Ablauföffnung (91) an dem unteren Ende eines geneigten Abschnitts (90) der unteren Fläche (3C) angeordnet ist, welche sich nach unten erstreckt, das heißt, weg von der oberen Fläche (3B), in Bezug auf den Rest der unteren Fläche, wobei der geneigte Abschnitt (92) ermöglicht, dass das Material, welches in der Filtrationskammer gefiltert ist, insbesondere durch die Filtertrennwand, zu der Ablauföffnung (91) durch Gravitation oder Absetzen gefördert ist, und/oder wobei der Ablaufhahn (90) wahlweise betrieben werden kann, in einem geschlossenen Zustand, in welchem die Ablauföffnung (91) abgestellt ist und es nicht erlaubt ist, dass das Fluid die Filtrationskammer (3) verlässt, oder einem offenen Zustand, in welchem die Ablauföffnung (91) in Kommunikation mit dem Äußeren der Vorrichtung gesetzt ist.

14. Verfahren zum Filtern eines Fluids, welches in einem Sanitär- und Wärmesystem zirkuliert, wobei das Verfahren die Schritte umfasst, aus:
- Anordnen wenigstens einer Vorrichtung (1) zum Filtern eines Fluids nach einem der vorhergehenden Ansprüche;
- Identifizieren einer Leitung, welche von einem Sanitär- und Wärmesystem kommt, insbesondere einer Warmwasserrückführleitung von einem System von Wärmelementen, welche ein Wasserfluss führt, welcher einer Filtration zu unterziehen ist;
- Identifizieren einer Leitung, welche zu einem Boiler des Sanitär- und Wärmesystems gerichtet wird, wobei die Leitung einen Wasserfluss, welcher eine Filtration durchlaufen hat, zu dem Boiler führt;
- Betreiben der Vorrichtung (1) wahlweise in einer der Betriebskonfigurationen.

## Revendications

1. Dispositif (1) de filtration d'un fluide circulant dans un système de plomberie et de chauffage, ledit dispositif (1) comprenant un corps (2) du dispositif qui délimite à l'intérieur de celui-ci une chambre de filtration (3) qui est destinée à être traversée par un fluide à soumettre à une filtration passant à travers elle, ledit corps étant pourvu :
- d'une première ouverture d'entrée/de sortie (10), qui délimite ladite chambre de filtration (3) en communication avec l'extérieur du dispositif et qui est configurée pour être associée à une conduite afin de recevoir de celle-ci, ou d'envoyer à celle-ci, du fluide entrant, ou sortant, dudit corps du dispositif ;
- une seconde ouverture d'entrée/de sortie (20), qui délimite ladite chambre de filtration (3) en communication avec l'extérieur du dispositif et qui est configurée pour être associée à une conduite respective afin de recevoir de celle-ci, ou d'envoyer à celle-ci, du fluide entrant, ou sortant, dudit corps du dispositif ;
- une troisième ouverture d'entrée/de sortie (30), qui délimite ladite chambre de filtration (3) en communication avec l'extérieur du dispositif et qui est configurée pour être associée à une conduite respective afin de recevoir de celle-ci, ou d'envoyer à celle-ci, du fluide entrant, ou sortant, dudit corps du dispositif ;
le dispositif étant configuré pour provoquer un passage de fluide à travers ladite chambre de filtration (3), d'une manière sélective selon une pluralité de configurations fonctionnelles, depuis une ouverture parmi ladite première ouverture d'entrée/de sortie (10), ladite seconde ouverture d'entrée/de sortie (20), et ladite troisième ouverture d'entrée/de sortie (30) vers une autre ouverture parmi ladite première ouverture d'entrée/de sortie (10), ladite seconde ouverture d'entrée/de sortie (20), et ladite troisième ouverture d'entrée/de sortie (30),
le dispositif comprenant en outre des éléments de filtration (40) qui sont au moins partiellement logés à l'intérieur de ladite chambre de filtration (3), ou associés audit corps (2) du dispositif, et fonctionnellement interposés entre ladite première ouverture d'entrée/de sortie, ladite seconde ouverture d'entrée/de sortie et ladite troisième ouverture d'entrée/de sortie pour conduire une filtration du fluide passant à travers la chambre de filtration ;
le dispositif comprenant en outre un élément de fermeture (4) qui est configuré pour intercepter sélectivement une ouverture parmi ladite première ouverture d'entrée/de sortie (10), ladite seconde ouverture d'entrée/de sortie (20), et ladite troisième ouverture d'entrée/de sortie (30), et en ce que ladite pluralité de configurations fonctionnelles comprend au moins :
- une première configuration fonctionnelle, dans laquelle ladite première ouverture (10) reçoit un flux de fluide entrant au niveau du dispositif, ladite seconde ouverture (20) envoie le flux de fluide filtré sortant du dispositif et ladite troisième ouverture (30) est interceptée par ledit élément de fermeture (4) ;
- une seconde configuration fonctionnelle, dans laquelle ladite première ouverture (10) reçoit un flux de fluide entrant au niveau du dispositif, ladite troisième ouverture (30) envoie le flux de fluide filtré sortant du dispositif et ladite seconde ouverture (20) est interceptée par ledit élément de fermeture (4) ;
- une troisième configuration fonctionnelle, dans laquelle ladite troisième ouverture (30) reçoit un flux de fluide entrant au niveau du dispositif, ladite première ouverture (10) envoie le flux de fluide filtré sortant du dispositif et ladite seconde ouverture (20) est interceptée par ledit élément de fermeture (4) ;
- une quatrième configuration fonctionnelle, dans laquelle ladite seconde ouverture (20) reçoit un flux de fluide entrant au niveau du dispositif, ladite première ouverture (10) envoie le flux de fluide filtré sortant du dispositif et ladite troisième ouverture (30) est interceptée par ledit élément de fermeture (4) ;
le dispositif étant **caractérisé en ce que** lesdits éléments de filtration (40) comprennent au moins une cloison de filtration (41) configurée pour exécuter une séparation mécanique de substances et de particules solides présentes dans le fluide à traiter du fluide dans lequel elles se trouvent en suspension, ladite cloison de filtration (41) ayant la forme d'une feuille ou d'une membrane fine qui s'étend longitudinalement sur un plan d'extension (45) entre une extrémité supérieure (46) et une extrémité inférieure (47) ;
et dans lequel ladite cloison de filtration (41) est agencée à l'intérieur de ladite chambre de filtration (3) afin de subdiviser la chambre de filtration en une première demi-chambre (8) et une seconde demi-chambre (9), dans lequel :
- la première demi-chambre (8) se trouve en communication fluidique avec la première ouverture d'entrée/de sortie, sans passage à travers la cloison de filtration ;
- la seconde demi-chambre (9) se trouve en communication fluidique avec la seconde ouverture d'entrée/de sortie et avec la troisième ouverture d'entrée/de sortie, sans passage à travers la cloison de filtration ;
d'une manière telle que dans chacune de ladite pluralité de configurations fonctionnelles, pour passer depuis ladite première demi-chambre (8) vers ladite seconde demi-chambre (9), ou *vice versa,* le fluide transitant dans la chambre de filtration (3) passe à travers ladite cloison de filtration (41).

2. Dispositif (1) selon la revendication 1, dans lequel le passage entre la première demi-chambre (8) et la seconde demi-chambre (9) a nécessairement lieu à travers la cloison de filtration (41), et/ou dans lequel la première demi-chambre (8) et la seconde demi-chambre (9) sont raccordées l'une à l'autre uniquement à travers la cloison de filtration (41).

3. Dispositif (1) selon la revendication 1 ou 2, dans lequel la cloison de filtration (41) présente, au moins dans une portion de celui-ci, une structure pourvue d'une pluralité de passages (42) qui présentent une section de filtration donnée, de sorte que le passage du fluide depuis un premier côté (43) de la cloison de filtration vers un second côté (44) de la cloison de filtration détermine une rétention, sur le premier côté (43), des substances et des particules présentes dans le fluide et ayant des dimensions supérieures à ladite section de filtration, et *vice versa* le passage du fluide depuis le second côté (44) vers le premier côté (43) détermine une rétention, sur le second côté (44), des substances et des particules présentes dans le fluide et ayant des dimensions supérieures à ladite section de filtration.

4. Dispositif (1) selon l'une quelconque des revendications précédentes, dans lequel la cloison de filtration (41) est positionnée dans la chambre de filtration (3) d'une manière telle que le premier côté (43) de celle-ci fait face à la première ouverture d'entrée/de sortie et que le second côté (44) de celle-ci fait face à la troisième ouverture d'entrée/de sortie (30) et/ou à la seconde ouverture d'entrée/de sortie (20).

5. Dispositif (1) selon l'une quelconque des revendications précédentes, dans lequel la cloison de filtration (41) est configurée pour fonctionner dans une position unique d'utilisation qui est maintenue pour chacune de ladite pluralité de configurations fonctionnelles prises par le dispositif, dans lequel :
- elle empêche le fluide de passer directement depuis la première ouverture (10) vers la seconde ouverture (20) ou depuis la première ouverture (10) vers la troisième ouverture (30), sans passer à travers la cloison de filtration ;
- elle empêche un passage direct du fluide depuis la seconde ouverture (20) vers la première ouverture (10) ou depuis la troisième ouverture (30) vers la première ouverture (10) sans passer à travers la cloison de filtration ;
et/ou dans lequel la cloison de filtration (41) est configurée pour fonctionner en une position unique d'utilisation, qui est maintenue pour chacune de ladite pluralité de configurations fonctionnelles prises par le dispositif, dans lequel :
- un passage du fluide depuis la première ouverture (10) vers la seconde ouverture (20) ou depuis la première ouverture (10) vers la troisième ouverture (30) a lieu par un passage à travers la cloison de filtration ;
- un passage du fluide depuis la seconde ouverture (20) vers la première ouverture (10) ou depuis la troisième ouverture (30) vers la première ouverture (10) a lieu en passant à travers la cloison de filtration.

6. Dispositif (1) selon l'une quelconque des revendications précédentes, dans lequel lesdites configurations fonctionnelles fournissent un passage du fluide à travers la cloison de filtration (41), depuis le premier côté (43) vers le second côté (44), lorsque le fluide entre dans le dispositif depuis la première ouverture d'entrée/de sortie (10) et quitte le dispositif depuis la seconde ouverture d'entrée/de sortie (20) ou depuis la troisième ouverture d'entrée/de sortie (30), et/ou dans lequel lesdites configurations fonctionnelles fournissent un passage du fluide à travers la cloison de filtration (41), depuis le second côté (44) vers le premier côté (43), lorsque le fluide entre dans le dispositif depuis la seconde ouverture d'entrée/de sortie (20) ou depuis la troisième ouverture d'entrée/de sortie (30) et quitte le dispositif depuis la première ouverture d'entrée/de sortie (10).

7. Dispositif (1) selon l'une quelconque des revendications précédentes, dans lequel la chambre de filtration est délimitée latéralement par une surface latérale (3A), au-dessus par une surface supérieure (3B) et en-dessous par une surface inférieure (3C) du corps (2) du dispositif, et dans lequel la cloison de filtration est positionnée longitudinalement entre la surface inférieure (3C) et la surface supérieure (3B) de la chambre de filtration du corps (2) du dispositif, et/ou dans lequel la cloison de filtration présente deux dimensions prévalentes, sur ledit plan d'extension (45), et une troisième dimension inférieure, perpendiculairement audit plan d'extension, dans lequel lesdites deux dimensions prévalentes présentent une hauteur de la cloison de filtration le long d'une direction coïncidant à un axe d'extension longitudinal (2A) du corps (2) et une largeur de la cloison de filtration le long d'une direction perpendiculaire à l'axe d'extension longitudinal (2A) du corps (2), et dans lequel ladite hauteur de la cloison de filtration correspond sensiblement à la distance entre la surface supérieure (3B) et la surface inférieure (3C) de la chambre de filtration (3), de sorte qu'au niveau du dessus et du dessous la cloison se trouve en contact avec les surfaces de la chambre de filtration (3), et dans lequel ladite largeur de la cloison de filtration correspond à une dimension radiale de la chambre de filtration (3), de sorte qu'elle se trouve en contact avec la surface latérale (3A) de la chambre de filtration (3).

8. Dispositif (1) selon l'une quelconque des revendications précédentes, dans lequel le corps (2) du dispositif est pourvu d'une paroi de division (21) s'étendant à l'intérieur de la chambre de filtration (3) entre l'extrémité supérieure (46) de la cloison de filtration et un point de la surface supérieure interposé entre la première ouverture d'entrée/de sortie (10) et la seconde ouverture d'entrée/de sortie (20), et dans lequel la paroi de division (21) s'étend continuellement par rapport à la cloison de filtration (41), et conjointement à cette dernière, elle contribue à diviser la chambre de filtration longitudinalement en la première demi-chambre et la seconde demi-chambre, et/ou dans lequel la paroi de division (21) repose au moins partiellement sur le plan d'extension de la cloison de filtration et/ou sur l'axe d'extension longitudinal (2A) du corps du dispositif, et/ou dans lequel en partant d'un côté de la seconde ouverture d'entrée/de sortie (20), ledit côté faisant face à la première ouverture d'entrée/de sortie (10), la paroi de division (21) s'étend, à l'intérieur de la chambre de filtration (3) selon une direction sensiblement cohérente à l'axe d'extension longitudinal (2A) du corps du dispositif et sensiblement au niveau d'une hauteur (Q) coïncidant aux dimensions de la première ouverture d'entrée/de sortie (10) sur la surface latérale externe (6) du corps (2) du dispositif et/ou aux dimensions de la troisième ouverture d'entrée/de sortie (30) sur la surface latérale externe (6) du corps (2) du dispositif, et/ou dans lequel la cloison de filtration est positionnée longitudinalement entre la surface inférieure (3C) du corps (2) du dispositif et la paroi de division (21).

9. Dispositif (1) selon l'une quelconque des revendications précédentes, dans lequel les éléments de filtration (40) comprennent au moins un premier filtre magnétique (50) associé au corps (2) du dispositif et configuré pour collecter et retenir des substances et des particules ayant des propriétés ferromagnétiques et qui sont présentes dans le fluide à traiter, d'une manière permettant de les séparer du fluide passant à travers le dispositif, et dans lequel le corps (2) du dispositif comprend au moins une première protubérance creuse (51) qui émerge axialement, dans la chambre de filtration, depuis ladite surface inférieure (3C) vers ladite surface supérieure (3B), ladite première protubérance creuse (51) délimitant, à l'extérieur du corps (2) du dispositif, un premier logement (52) qui est de forme allongée, correspondant à la première protubérance creuse (51) et accessible depuis la surface inférieure (7), ledit premier logement (52) logeant le premier filtre magnétique (50), et/ou dans lequel ladite première protubérance creuse (51) émerge axialement à l'intérieur de ladite seconde demi-chambre ou, alternativement, à l'intérieur de ladite première demi-chambre, et/ou dans lequel le premier filtre magnétique (50) comprend au moins un premier élément magnétique (53) qui est configuré pour générer un champ magnétique permanent et inséré dans ledit premier logement (52) du corps (2) d'une manière permettant d'agir sur le fluide passant à travers la chambre de filtration (3) et de retenir les substances et particules ferromagnétiques présentes dans le fluide sur la surface de ladite première protubérance creuse (51) à l'intérieur du corps du dispositif.

10. Dispositif (1) selon l'une quelconque des revendications précédentes, ledit dispositif (1) étant configuré pour fonctionner sélectivement, lorsqu'il se trouve en cours d'utilisation, selon l'une des configurations fonctionnelles suivantes :
- une première configuration fonctionnelle, dans laquelle :
- la première ouverture d'entrée/de sortie (10) est destinée à être placée en communication avec une conduite provenant d'un système de plomberie et de chauffage, particulièrement d'une conduite de retour d'eau chaude depuis un système d'éléments de chauffage, afin de recevoir un flux d'eau à soumettre à une filtration ;
- la seconde ouverture d'entrée/de sortie (20) est destinée à être placée en communication avec une conduite dirigée vers une chaudière du système de plomberie et de chauffage, afin d'envoyer à celle-ci le flux d'eau à la suite d'une filtration ;
- la troisième ouverture d'entrée/de sortie (30) est interceptée par un élément de fermeture (4) ;
- le flux de fluide entrant au niveau de la première ouverture (10) s'écoule dans la première demi-chambre (8) et est nécessairement dirigé afin de passer à travers la cloison de filtration (41) depuis le premier côté (43), subissant une filtration mécanique et partant depuis le second côté (44) afin de s'écouler dans la seconde demi-chambre (9) ;
- le fluide se déplace à travers la seconde demi-chambre (9) où il subit une filtration magnétique par le premier filtre magnétique (50) ;
- le fluide est transporté vers la seconde ouverture d'entrée/de sortie (20), la troisième ouverture d'entrée/de sortie (30) étant interceptée ;
- une seconde configuration fonctionnelle, dans laquelle :
- la première ouverture d'entrée/de sortie (10) est destinée à être placée en communication avec une conduite provenant d'un système de plomberie et de chauffage, particulièrement une conduite de retour d'eau chaude depuis un système d'éléments de chauffage, afin de recevoir un flux d'eau à soumettre à une filtration ;
- la seconde ouverture d'entrée/de sortie (20) est interceptée par un élément de fermeture (4) ;
- la troisième ouverture d'entrée/de sortie (30) est destinée à être placée en communication avec une conduite dirigée vers une chaudière du système de plomberie et de chauffage, afin d'envoyer à celle-ci le flux d'eau à la suite d'une filtration ;
- le flux de fluide entrant au niveau de la première ouverture (10) s'écoule dans la première demi-chambre (8) et est nécessairement dirigé afin de passer à travers la cloison de filtration (41) depuis le premier côté (43), subissant une filtration mécanique et quittant le second côté (44) afin de s'écouler dans la seconde demi-chambre (9) ;
- le fluide se déplace à travers la seconde demi-chambre (9) où il subit une filtration magnétique par le premier filtre magnétique (50) ;
- le fluide est transporté vers la troisième ouverture d'entrée/de sortie (30), la seconde ouverture d'entrée/de sortie (20) étant interceptée ;
- une troisième configuration fonctionnelle, dans laquelle :
- la troisième ouverture d'entrée/de sortie (30) est destinée à être placée en communication avec une conduite provenant d'un système de plomberie et de chauffage, particulièrement une conduite de retour d'eau chaude depuis un système d'éléments de chauffage, afin de recevoir un flux d'eau à soumettre à une filtration ;
- la seconde ouverture d'entrée/de sortie (20) est interceptée par un élément de fermeture (4) ;
- la première ouverture d'entrée/de sortie (10) est destinée à être placée en communication avec une conduite dirigée vers une chaudière du système de plomberie et de chauffage, afin d'envoyer à celle-ci le flux d'eau à la suite d'une filtration ;
- le flux de fluide entrant au niveau de la troisième ouverture (30) s'écoule dans la seconde demi-chambre (9) où il subit une filtration magnétique par le premier filtre magnétique (50) et comme la seconde ouverture d'entrée/de sortie (20) est interceptée, il est ainsi nécessairement dirigé afin de passer à travers la cloison de filtration (41) depuis le second côté (44), subissant une filtration mécanique et partant depuis le premier côté (43) afin de s'écouler dans la première demi-chambre (8) ;
- le fluide se déplace à travers la première demi-chambre (8) et est transporté vers la première ouverture d'entrée/de sortie (10) ;
- une quatrième configuration fonctionnelle, dans laquelle :
- la seconde ouverture d'entrée/de sortie (20) est destinée à être placée en communication avec une conduite provenant d'un système de plomberie et de chauffage, particulièrement une conduite de retour d'eau chaude depuis un système d'éléments de chauffage, afin de recevoir un flux d'eau à soumettre à une filtration ;
- la troisième ouverture d'entrée/de sortie (30) est interceptée par un élément de fermeture (4) ;
- la première ouverture d'entrée/de sortie (10) est destinée à être placée en communication avec une conduite dirigée vers une chaudière du système de plomberie et de chauffage, afin d'envoyer à celle-ci le flux d'eau à la suite d'une filtration ;
- le flux de fluide entrant au niveau de la seconde ouverture d'entrée/de sortie (20) s'écoule dans la seconde demi-chambre (9) où il subit une filtration magnétique par le premier filtre magnétique (50) et comme la troisième ouverture d'entrée/de sortie (30) est interceptée, il est ainsi nécessairement dirigé afin de passer à travers la cloison de filtration (41) depuis le second côté (44), subissant une filtration mécanique et partant depuis le premier côté (43) afin de s'écouler dans la première demi-chambre (8) ;
- le fluide se déplace à travers la première demi-chambre (8) et est transporté vers la première ouverture d'entrée/de sortie (10).

11. Dispositif (1) selon la revendication 9 ou 10, dans lequel le corps (2) du dispositif comprend une seconde protubérance creuse (81) qui émerge axialement, dans la chambre de filtration (3), depuis ladite surface inférieure (3C) vers ladite surface supérieure (3B), ladite seconde protubérance creuse (81) délimitant, à l'extérieur du corps (2) du dispositif, un second logement (82) qui est de forme allongée, correspondant à la seconde protubérance creuse (81) et accessible depuis la surface inférieure (7), et/ou dans lequel ladite seconde protubérance creuse (81) émerge axialement à l'intérieur de la demi-chambre, entre la première (8) et la seconde demi-chambre (9) non occupée par la première protubérance creuse (51), ou dans lequel ladite seconde protubérance creuse (81) émerge axialement à l'intérieur de ladite première demi-chambre (8), tandis que ladite première protubérance creuse (51) émerge axialement à l'intérieur de ladite seconde demi-chambre (9), et/ou dans lequel ledit premier filtre magnétique (50) peut être sélectivement logé dans la première protubérance creuse (51) ou dans la seconde protubérance creuse (81) du corps (2) du dispositif, selon la configuration fonctionnelle sélectionnée.

12. Dispositif (1) selon la revendication précédente, dans lequel les éléments de filtration (40) comprennent un second filtre magnétique (80) associé au corps (2) du dispositif et configuré pour collecter et retenir des substances et des particules ayant des propriétés ferromagnétiques et qui sont présentes dans le fluide à traiter, d'une manière permettant de les séparer du fluide passant à travers le dispositif, et/ou dans lequel ledit second filtre magnétique (80) est structurellement identique audit premier filtre magnétique (50), et/ou dans lequel ledit second filtre magnétique (80) comprend au moins un second élément magnétique (83) qui est configuré pour générer un champ magnétique permanent et inséré dans ledit second logement du corps (2) d'une manière permettant d'agir sur le fluide passant à travers la chambre de filtration (3) et de retenir les substances et particules ferromagnétiques présentes dans le fluide sur la surface de ladite seconde protubérance creuse (81) à l'intérieur du corps du dispositif, et dans lequel ledit second filtre magnétique (80) est logé dans ledit second logement (82).

13. Dispositif (1) selon l'une quelconque des revendications précédentes qui comprend un robinet de purge (90) configuré pour permettre à la chambre de filtration (3) d'être vidée sans démonter le dispositif du système dans lequel il est installé, sans démonter la première, la seconde, et la troisième ouverture d'entrée/de sortie des conduites respectives, et sans démonter le corps (2) du dispositif, dans lequel le robinet de purge (90) est positionné au niveau d'une ouverture de purge (91) localisée sur la surface inférieure (3C) du corps (2) chevauchant l'extrémité inférieure (47) de la cloison de filtration (41) d'une manière permettant de se trouver en communication avec la première demi-chambre (8) et avec la seconde demi-chambre (9), sans placer la première et la seconde demi-chambre en communication l'une avec l'autre, et/ou dans lequel l'ouverture de purge (91) est localisée au niveau de l'extrémité inférieure d'une portion inclinée (92) de la surface inférieure (3C), s'étendant vers le bas, c'est-à-dire, à l'opposé de la surface supérieure (3B), par rapport au reste de la surface inférieure, ladite portion inclinée (92) permettant au matériau filtré à l'intérieur de la chambre de filtration, particulièrement par la cloison de filtration, d'être transporté vers l'ouverture de purge (91) par gravité ou sédimentation, et/ou dans lequel le robinet de purge (90) peut être manœuvré sélectivement sous un état fermé, dans lequel l'ouverture de purge (91) est interceptée et ne permet pas au fluide de quitter la chambre de filtration (3), ou un état ouvert, dans lequel l'ouverture de purge (91) est placée en communication avec l'extérieur du dispositif.

14. Procédé de filtration d'un fluide circulant dans un système de plomberie et de chauffage, ledit procédé comprenant les étapes consistant à :
- agencer au moins un dispositif (1) de filtration d'un fluide selon l'une quelconque des revendications précédentes ;
- identifier une conduite provenant d'un système de plomberie et de chauffage, particulièrement une conduite de retour d'eau chaude depuis un système d'éléments de chauffage, transportant un flux d'eau à soumettre à une filtration ;
- identifier une conduite dirigée vers une chaudière du système de plomberie et de chauffage, cette conduite transportant un flux d'eau qui a subi une filtration vers la chaudière ;
- faire fonctionner le dispositif (1) sélectivement dans l'une desdites configurations fonctionnelles.
